# EUROPEAN PATENT APPLICATION

(11) **EP 4 769 112 A1**
(43) Date of publication of application: **01.07.2026**
(21) Application number: 25227465.9
(22) Date of filing: 29.12.2025
(51) Int. Cl.: G06F 3/12, B41J 2/175, G03G 15/00, G06K 15/00

(54) **COMMUNICATION METHOD, INFORMATION PROCESSING DEVICE, IMAGE FORMING DEVICE AND CONSUMABLES**

(30) Priority: 31.12.2024 CN 202411998785; 29.10.2025 CN 202511569158
(71) Applicant: Zhuhai Pantum Electronics Co., Ltd., Zhuhai, Guangdong 519055 (CN)
(72) Inventor: LI, Haixiong, Zhuhai, 519055 (CN); NING, Dan, Zhuhai, 519055 (CN); HUANG, Xuqiu, Zhuhai, 519055 (CN)
(74) Representative: Isarpatent

(57) **Abstract**

A communication method includes: acquiring consumption increment data, which is used to indicate the consumption information of consumables corresponding to a print task performed by the image forming device; determining, based on the consumption increment data, cumulative consumption increment data and/or consumption increment status data of the consumables corresponding to the print task; and transmitting the cumulative consumption increment data and/or consumption increment status data to the image forming device. The communication method according to the present disclosure enables timely and reliable synchronization of consumable consumption increment data between the image forming device and the information processing device, facilitating user understanding of consumable status information, improving the stability of print operations, and without incurring additional data and communication overhead.

## Description

### CROSS-REFERENCE TO RELATED APPLICATION(S)

This application claims priority to Chinese Patent Application No. 202411998785.6 filed on December 31, 2024 and to Chinese Patent Application No. 202511569158.5 filed on October 29, 2025, both of which are incorporated herein by reference in their entireties.

### FIELD OF THE TECHNOLOGY

The present disclosure relates to the field of print technology, and more specifically, to a communication method, an information processing device, an image forming device, and consumables.

### BACKGROUND

An image forming device is a device that forms an image on a recording medium by means of imaging principles, including but not limited to printers, copiers, fax machines, multifunction image making and copying apparatuses, electrostatic print apparatuses, and any other similar apparatuses. Image forming devices typically have removable consumables containing consumable materials. For example, for laser printers, the corresponding consumables may be toner cartridges or imaging units, and the corresponding consumable materials are toner or photosensitive drums; for inkjet printers, the corresponding consumables may be ink cartridges, and the corresponding consumable materials are toner or ink.

To facilitate the management of consumables, an information processing device (for example, a consumable chip) is usually configured to work with the consumables. When the consumables are installed in the image forming device, the information processing device may communicate and interact with the image forming device. Consumable material consumption information is one of the key data points for consumable materials. It is used to determine the remaining or consumed amount of consumable materials in the consumables, so as to inform the user of the available consumables. Current technology lacks a solution for timely and reliable synchronization of consumable material consumption information between the image forming device and the information processing device.

### SUMMARY

In one aspect, the present disclosure provides a communication method applied to an information processing device. The method includes: acquiring consumption increment data, configured to indicate consumption information of consumable materials corresponding to a print task performed by an image forming device; based on the consumption increment data, determining cumulative consumption increment data and/or consumption increment status data of the consumable materials corresponding to the print task; and transmitting the cumulative consumption increment data and/or the consumption increment status data to the image forming device.

In another aspect, the present disclosure provides an information processing device. The device includes: a memory and one or more processors, the memory storing a computer program executable by the one or more processors, wherein when the computer program is executed, the one or more processors are configured to implement the communication method, wherein the method includes: acquiring consumption increment data, configured to indicate consumption information of consumable materials corresponding to a print task performed by an image forming device; based on the consumption increment data, determining cumulative consumption increment data and/or consumption increment status data of the consumable materials corresponding to the print task; and transmitting the cumulative consumption increment data and/or the consumption increment status data to the image forming device.

In yet another aspect, the present disclosure provides a consumable. The consumable includes: a housing; a developer container located within the housing for containing developer; and the information processing device, where the apparatus includes a memory and one or more processors, the memory storing a computer program executable by the one or more processors, wherein when the computer program is executed, the one or more processors are configured to implement the communication method, wherein the method includes: acquiring consumption increment data, configured to indicate consumption information of consumable materials corresponding to a print task performed by an image forming device; based on the consumption increment data, determining cumulative consumption increment data and/or consumption increment status data of the consumable materials corresponding to the print task; and transmitting the cumulative consumption increment data and/or the consumption increment status data to the image forming device.

In yet another aspect, the present disclosure provides a consumable. The consumable includes a photosensitive drum; a charging roller for charging the photosensitive drum; and the information processing device, where the apparatus includes a memory and one or more processors, the memory storing a computer program executable by the one or more processors, wherein when the computer program is executed, the one or more processors are configured to implement the communication method, wherein the method includes: acquiring consumption increment data, configured to indicate consumption information of consumable materials corresponding to a print task performed by an image forming device; based on the consumption increment data, determining cumulative consumption increment data and/or consumption increment status data of the consumable materials corresponding to the print task; and transmitting the cumulative consumption increment data and/or the consumption increment status data to the image forming device.

### BRIEF DESCRIPTION OF THE DRAWINGS

The above and other objects, features, and advantages of the present disclosure will become more apparent from the more detailed description of certain embodiments thereof in conjunction with the accompanying drawings. The drawings are provided to further illustrate certain embodiments of the present disclosure and form part of the specification. They are used together with certain embodiments of the present disclosure to explain the disclosure and do not constitute a limitation thereof. In the drawings, the same reference numerals generally represent the same components or steps.
FIG. 1 is a structural block diagram illustrating an image forming system according to certain embodiments of the present disclosure.
FIGs. 2A and 2B are further structural block diagrams illustrating an image forming system according to certain embodiments of the present disclosure.
FIG. 3 is a schematic structural diagram illustrating an image forming device according to certain embodiments of the present disclosure.
FIG. 4 is a flowchart illustrating a communication method applied to an information processing device according to certain embodiments of the present disclosure.
FIG. 5 is a flowchart further illustrating a communication method applied to an information processing device according to certain embodiments of the present disclosure.
FIG. 6 is a flowchart illustrating a communication method applied to an image forming device according to certain embodiments of the present disclosure.
FIG. 7 is a schematic diagram illustrating a communication method of an image forming system according to certain embodiments of the present disclosure.
FIG. 8 is a block diagram illustrating an information processing device according to certain embodiments of the present disclosure.
FIG. 9 is a block diagram illustrating an image forming device according to certain embodiments of the present disclosure.
FIGs. 10 to 14 are block diagrams illustrating consumables according to certain embodiments of the present disclosure.
FIG. 15 is a schematic diagram illustrating a non-transitory computer-readable storage medium according to certain embodiments of the present disclosure.
FIG. 16 is a schematic diagram illustrating a computer program product according to certain embodiments of the present disclosure.

### DETAILED DESCRIPTION

To make the objectives, technical solutions, and advantages of the present disclosure more apparent, exemplary embodiments according to the present disclosure will now be described in detail with reference to the accompanying drawings. Obviously, the described embodiments are merely certain embodiments of the present disclosure, and not all embodiments of the present disclosure. It should be understood that the present disclosure is not limited to the exemplary embodiments described herein.

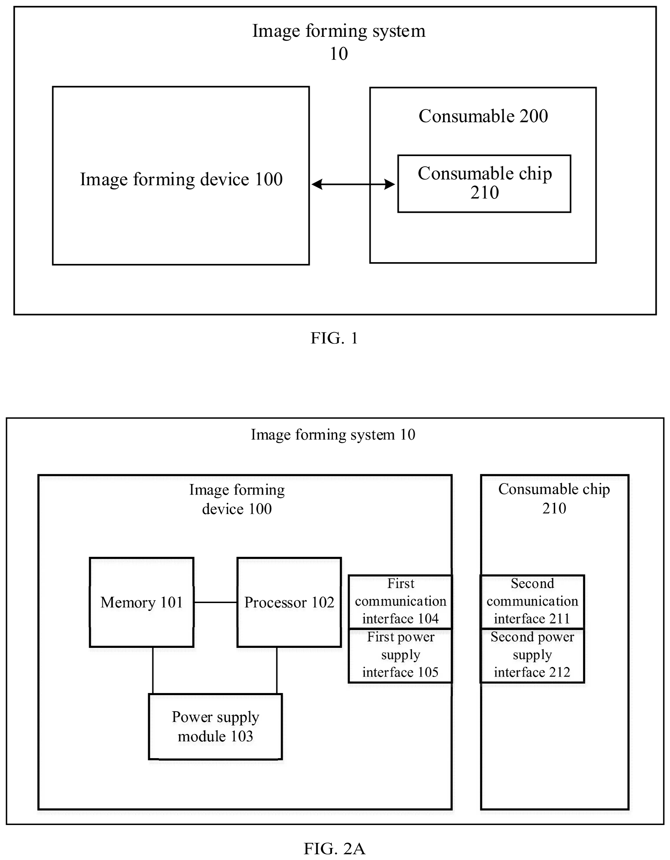

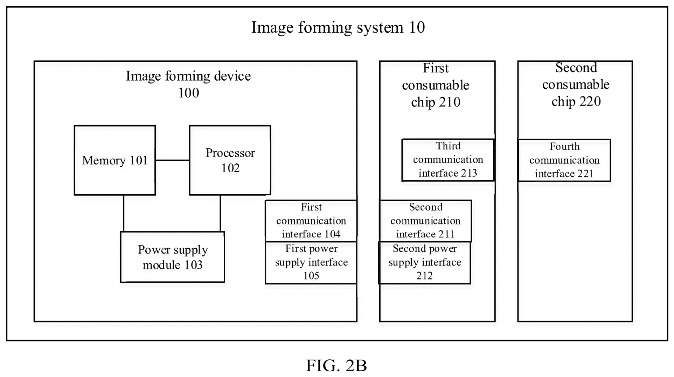

First, an image forming system according to certain embodiments of the present disclosure will be described with reference to FIGs. 1 to 2B. FIG. 1 is a structural block diagram illustrating an image forming system according to certain embodiments of the present disclosure. FIGs. 2A and 2B are further structural block diagrams illustrating an image forming system according to certain embodiments of the present disclosure.

As shown in FIG. 1, the image forming system 10 includes an image forming device 100 and consumables 200. The image forming device 100 is the part of the image forming system 10 that performs image forming operations, and the consumables 20 are replaceable components of the image forming system 10. For example, when the image forming device 100 is an inkjet printer, laser printer, 3D printer, label printer, or dot matrix printer, the consumables 200 are correspondingly ink cartridges, toner cartridges, drum units, toner cartridges, ribbon cartridges, or the like.

One possible implementation is that the consumable 200 has a split structure, including a drum cartridge and a developing cartridge (not shown in FIG. 1) that are detachable from each other. The drum cartridge includes a photosensitive drum and a charging roller, and the developing cartridge includes a developer container, a developer roller, and a developer delivery member. Another possible approach is that the consumable 200 is an integrated structure, for example, the consumable 200 includes a developer container, a developer roller, a developer delivery member, a photosensitive drum, a charging roller, or the like. (not shown in FIG. 1).

Furthermore, the consumable 200 may also include only of a housing and a developer container. It should be noted that the consumable 200 may also be the aforementioned developing cartridge or drum cartridge. The aforementioned developer container is used to hold developer such as toner, and the developer delivery member is a member such as a toner feeding roller or a toner feeding screw used for stirring and/or conveying toner. Of course, the aforementioned developing cartridge may also include only the aforementioned developer container, and this is not limited here. Furthermore, the aforementioned developing cartridge may also contain only the aforementioned developer container and developer delivery member, possible examples are unlimited.

In one possible implementation, the consumable 200 may also include a toner cartridge and/or an imaging assembly. The toner cartridge is used to deliver toner to the imaging assembly when the toner contained in the imaging assembly is insufficient, so that the image forming device 100 forms an image based on the toner delivered by the imaging assembly. When the consumable 200 is a toner cartridge, the consumable 200 may include only a housing and a developer container, or it may include a housing, a developer container, and a developer delivery member. The present disclosure does not impart restriction on this. When the consumable 200 is an imaging assembly, the consumable 200 may include a housing, a developer container, a developer delivery unit, a charging roller, a photosensitive drum, or the like. A developer transmission channel is provided between the developer container and the imaging assembly, but the present disclosure does not impart restriction on this.

It should be noted that the consumable 200 mentioned in certain embodiments of the present disclosure may also be other easily damaged components, parts, or units (such as paper boxes) in the image forming device 100 that need to be replaced, which also belong to the technical solutions corresponding to the consumable 200 protected in the present disclosure.

To facilitate the management of consumable 200, consumable 200 is also used in conjunction with consumable chip 210, which is an electronic device with storage function. Consumable chip 210 may also include other components such as chip control unit (for example, microcontroller unit (MCU)). In certain embodiments, the consumable chip 210 may be installed on the consumable 200. The consumable chip 210 may be installed on the consumable 200 before it leaves the factory, or it may be installed on the consumable 200 by the user after it leaves the factory. In certain embodiments, the consumable chip 210 does not need to be installed on the consumable 200, but is fixed to the image forming device 100 by a mounting component or adhesive. When the image forming device 100 uses the consumable 200, the contact points of the consumable chip 210 make electrical contact with the corresponding contact terminals of the image forming device 100, thereby realizing the electrical connection between the consumable chip 210 and the image forming device 100. When the image forming device 100 is not using the consumable 200 (the consumable 200 is not in operation), the contact points of the consumable chip 210 may or may not make contact with the corresponding contact terminals of the image forming device 100. For example, when consumable 200 is installed in image forming device 100 but not used, or when consumable 200 is removed from image forming device 100. It should be noted that when consumable 200 is a split structure including a drum cartridge and a developing cartridge that are detachable from each other, the drum cartridge and the developing cartridge are usually each equipped with a consumable chip 210.

When the consumable 200 is installed on the image forming device 100, the consumable chip 210 is communicatively connected to the image forming device 100. The communication connection may be made via contacts, antennas, or coils, and the present disclosure does not impart restriction on this. It should be noted that the consumable chip 210 stores information including raw data, which is information related to the image forming system 10. For example, the raw data may include at least one of the following categories: 1) Imaging control related parameters, such as print engine control parameter information, specifically high pressure control parameters, fixing temperature parameters, paper feed speed control parameters, or the like. When the image forming device is a color printer, it also includes color calibration parameter information or calibration patterns. 2) Consumable-related parameters, such as various proportional factors for calculating toner consumption; or basic attribute information of the consumable, which may specifically include the consumable model, serial number, and capacity/lifespan. It should be noted that those skilled in the technical field may also design the consumable chip 210 to store other types of raw data according to actual needs, and the present disclosure does not impose restriction on this.

In some possible implementations, the information processing device in certain embodiments is a consumable chip 210 or a consumable chipset (not shown). When the consumable chip 210 is electrically connected to the image forming device 100, the consumable chip 210 may communicate with the image forming device 100 and provide information related to the consumable 200 to the image forming device 100, so that the image forming device 100 may obtain basic information about the consumable 200, such as the manufacturer, type of the recording material (toner, ink), color, capacity, and usage. In addition, during the image forming process, the image forming device 100 may also write update information of the consumable 200 (for example, developer usage) into the consumable chip 210. In certain embodiments, the consumable chip 210 includes a substrate and a plurality of contact points arranged on the substrate. Each contact point is used to electrically connect with a plurality of contact terminals arranged on the image forming device 100, thereby realizing communication between the image forming device 100 and the consumable chip 210. The plurality of contact points may include a power contact VCC, a ground contact GND, a data line contact SDA, and a clock line contact SCL. In certain embodiments, the consumable chip 210 in the present disclosure may further include an adapter board in addition to the substrate, where the adapter board is electrically connected to the substrate, and at least some of the aforementioned plurality of contact points may be arranged on the adapter board.

Specifically, referring to FIG. 2A, the second communication interface 211 of the consumable chip 210 may be electrically connected to the first communication interface 104 of the image forming device 100, thereby being electrically connected to the processor 102 of the image forming device 100 through the first communication interface 104. In certain embodiments, the first communication interface 104 and the second communication interface 211 may be 12C interfaces, respectively. The second power supply interface 212 of the consumable chip 210 may be electrically connected to the first power supply interface 105 of the image forming device 100, so that the image forming device 100 may supply power to the consumable chip 210 through the first power supply interface 105 and the second power supply interface 212. In certain embodiments, the image forming device 100 is further provided with a memory 101 and a power supply module 103. The memory 101 is connected to the processor 102 and may store computer execution instructions. When the image forming device 100 performs corresponding processing, it may execute the computer execution instructions stored in the memory 101 through the processor 102. The power supply module 103 is connected to the memory 101 and the processor 102 respectively, and may supply power to the memory 101 and the processor 102 to ensure normal operation.

In certain embodiments, the information processing device of the present disclosure includes a first consumable chip and a second consumable chip. Referring to FIG. 2B, the first consumable chip 210 (the first consumable chip 210 is the same as the consumable chip 210 in FIG. 2A) and the second consumable chip 220 are communicatively connected. When the image forming device 100 and the first consumable chip 210 communicate, the image forming device 100 acts as the host and transmits instructions to the first consumable chip 210, and the first consumable chip 210 acts as the slave and responds to the instructions transmitted by the host. When the first consumable chip 210 and the second consumable chip 220 communicate, the first consumable chip 210 acts as the host and transmits instructions to the second consumable chip 220, and the second consumable chip 220 acts as the slave and responds to the instructions transmitted by the first consumable chip 210. The instruction transmitted by the first consumable chip 210 to the second consumable chip 220 may be generated by the first consumable chip 210 or forwarded by the first consumable chip 210 from the instruction transmitted by the image forming device 100. At this time, the first consumable chip 210 determines who should process the instruction transmitted by the image forming device 100. When it determines that the instruction should be processed by the second consumable chip 220, it forwards the instruction to the second consumable chip 220. The third communication interface 213 of the first consumable chip 210 may be electrically connected to the fourth communication interface 221 of the second consumable chip 220. In certain embodiments, the third communication interface 213 and the fourth communication interface 221 may be wired communication interfaces, preferably I2C interfaces, or optical, infrared or other suitable information transmission path interfaces.

In certain embodiments, a switch (not shown) controlled by the first consumable chip 210 is provided in the communication link between the first consumable chip 210 and the second consumable chip 220 and the image forming device 100. When the first consumable chip 210 determines that the current stage requires the first consumable chip 210 to communicate with the image forming device 100, the communication link between the first consumable chip 210 and the image forming device 100 is connected by the switch, or the communication link between the first consumable chip 210 and the image forming device 100 is kept connected. When the first consumable chip 210 determines that the second consumable chip 220 needs to communicate with the image forming device 100 at the current stage, it connects the communication link between the second consumable chip 220 and the image forming device 100 via a switch; when the first consumable chip 210 determines that the second consumable chip 220 does not need to communicate with the image forming device 100 at the current stage, it disconnects the communication link between the second consumable chip 220 and the image forming device 100 via a switch. The information processing device of the present disclosure may include a chipset, which includes the first consumable chip 210 and the second consumable chip 220.

In some possible implementations, the information processing device of the present disclosure includes the aforementioned consumable chip or consumable chipset, and an auxiliary circuit module. The consumable chip is connected to the auxiliary circuit module, specifically through a wired communication interface, or through an optical, infrared, or other suitable information transmission path interface. The auxiliary circuit module is used to implement some or additional functions of the consumable chip. The auxiliary circuit module may respond to the instructions of the consumable chip, or be enabled by signals other than the instructions from the consumable chip, to provide the consumable chip or the main device with corresponding data or waveform information. The auxiliary circuit module may include logic units such as AND gates, OR gates, NOT gates, and flip-flops, or circuit units of devices such as FPGAs, MCUs, and DSPs. Those skilled in the technical field may design the auxiliary circuit module according to actual needs. Certain embodiments of the present disclosure do not impart restriction on the composition and specific functions of the auxiliary circuit module.

It should be noted that when the image forming device may be equipped with multiple consumables, each consumable is equipped with an information processing device, or some consumables are equipped with an information processing device. That is, there may be a one-to-one relationship between consumables and information processing devices. For example, an image forming device may be equipped with 6 consumables, and each of the 6 consumables is equipped with an information processing device. The relationship between consumables and information processing devices may also be one-to-many. For example, an image forming device may be equipped with 6 consumables, one of which is equipped with an information processing device. This information processing device processes the information between the 6 consumables and the image forming device. For example, the information processing device stores the information corresponding to the six consumables, provides the information corresponding to the six consumables to the image forming device, or receives the information corresponding to the 6 consumables transmitted by the image forming device.

Furthermore, the image forming device includes an image forming control unit and an image forming unit, where the image forming control unit is used to control the entire image forming device, and the image forming unit is used to form an image on the fed paper based on image data under the control of the image forming control unit.

The image forming control unit may be a system on chip (SoC). An SoC is a miniature system composed of components from multiple systems. It is configured to control the imaging processing operations of the image forming device, such as performing linear correction, noise reduction, bad pixel removal, and detail enhancement on image data, thereby improving the quality of the image output. The image forming control unit is also used to perform data transmission and reception, command transmission and reception, and processing operations related to the print image engine control. For example, it may transmit and receive data, print engine control commands, status, or the like. through interface units (including but not limited to USB ports, wired network ports, wireless network ports, or other interfaces).

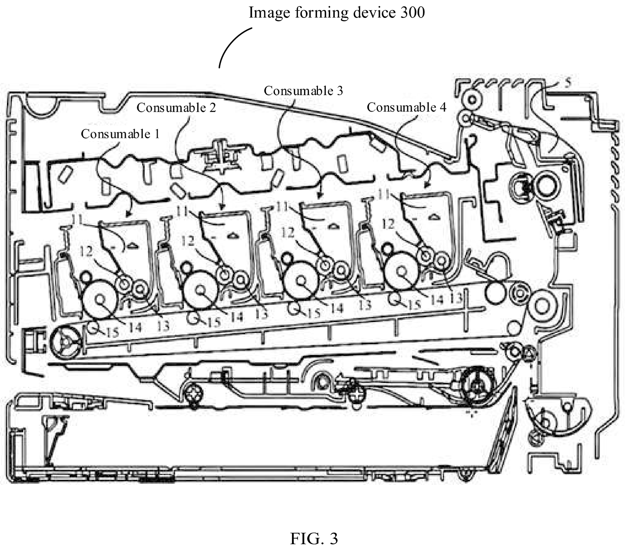

Referring to FIG. 3, FIG. 3 is a schematic diagram illustrating the structure of an image forming device according to certain embodiments of the present disclosure. As shown in FIG. 3, the image forming unit of the image forming device 300 may include: a developer container 11, a developing unit 12, a developer delivery member 13, a photosensitive unit 14, a transfer unit 15, and a fixing assembly 5, or the like. The paper to be printed moves in the paper feeding direction, and after passing through the developer delivery member 13 for powder feeding and the developing unit 12 for developing, it reaches the clamping area between the photosensitive unit 14 and the transfer unit 15 for transfer, and then passes through the fixing assembly 5 for fixing to complete the image forming operation. The developer container 11 is used to hold developer, which may be a material such as toner or carbon powder; the developing unit 12 includes a developing roller, or the like.; the developer delivery member 13 includes a powder delivery roller, or the like.; the photosensitive unit 14 includes an organic photo conductor (OPC) and a charging roller, or the like, where the charging roller is used to charge the photoconductor.

Typically, the image forming device 300 is detachably equipped with at least one consumable. Taking the image forming device 300 shown in FIG. 3 as an example, the image forming device 300 is detachably equipped with four consumables (consumable 1, consumable 2, consumable 3 and consumable 4 shown in FIG. 3, respectively, which are used to provide the image forming device 300 with four colors of developer: black (K), cyan (C), magenta (M) and yellow (Y). Of course, in other embodiments, the number of consumables installed in the image forming device 300 may be increased or decreased, for example, to 5 or 6 or even more or less, or the like, and the present disclosure does not impart restriction on this.

The communication method according to certain embodiments of the present disclosure will now be described in further detail with reference to the accompanying drawings. The communication method according to certain embodiments of the present disclosure is performed by an image forming device and/or an information processing device in an image forming system described with reference to FIGs. 1 to 3.

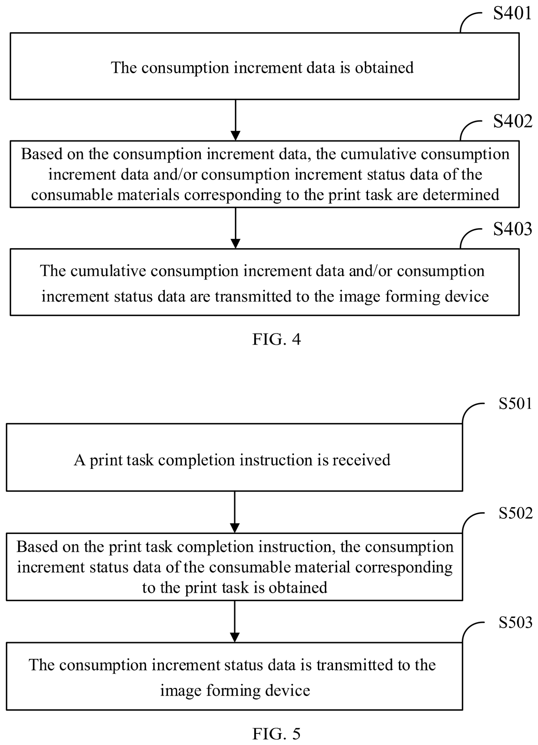

FIG. 4 is a flowchart illustrating a communication method applied to an information processing device according to certain embodiments of the present disclosure. Specifically, the communication method includes the following steps.

At step S401, the consumption increment data is obtained.

In certain embodiments of the present disclosure, the consumption increment data is used to indicate the consumption information of consumable materials corresponding to the image forming device performing a print task. The consumption information may be one or more of the following: number of pages printed, print time, developer consumption (for example, toner weight in grams; or toner dots in thousands), and the rotation distance of the photosensitive drum.

It should be understood that a print task according to certain embodiments of the present disclosure may include one or more print jobs. For example, when a print task includes multiple print jobs, the image forming device may shut down the print engine after all print jobs are completed, or trigger the start and stop of the print engine once each print job is completed.

According to certain embodiments of the present disclosure, a print task may correspond to a print job. The completion of each print job indicates the completion of the corresponding print task and triggers the start and stop of the print engine. That is to say, one start and stop of the print engine corresponds to one print task. It may be understood that the start and end of the print task may be determined according to the print task start instruction and the print task end instruction. Specifically, the start and end of the print task may be determined according to the "job start" flag and the "job end" flag. It is understandable that when the image forming device performs the corresponding print task, the information processing device may acquire at least one consumption increment data.

According to certain embodiments of the present disclosure, a print task may also correspond to multiple print jobs, and the image forming device triggers the start and stop of the print engine based on the start and completion of all print jobs.

In certain embodiments of the present disclosure, acquiring data from the consumption increment data may mean that the information processing device determines data from itself based on a particular acquisition method, or it may mean that the information processing device acquires data from the image forming device.

In certain embodiments of the present disclosure, the information processing device may first acquire the associated data of the consumption increment data, and then convert the consumption increment data based on the associated data of the consumption increment data to obtain the consumption increment data.

In the communication process between the information processing device and the image forming device, if the information processing device obtains consumption increment data from the image forming device, in certain embodiments of the present disclosure, the information processing device may directly read and parse the instructions received in real time from the image forming device to obtain the consumption increment data. In certain embodiments of the present disclosure, the information processing device may further cache instructions received in real time from the image forming device, and then parse the cached instructions to obtain consumption increment data. In certain embodiments of the present disclosure, the information processing device may further determine consumption increment data based on business data under a particular business scenario, which may be obtained from the image forming device.

In certain embodiments of the present disclosure, the information processing device may also obtain consumption increment data from an external device (for example, a repeater). That is, the external device, such as the repeater, first receives the consumption increment data transmitted by the image forming device, and then the information processing device obtains the consumption increment data from the external device, such as the repeater.

Taking the acquisition of consumption increment data from the image forming device by the information processing device as an example, in certain embodiments of the present disclosure, the information processing device is, for example, the consumable chip 210 described with reference to FIG. 1 and FIG. 2A, or the consumable chips 210 and 220 described with reference to FIG. 2B, and the image forming device is, for example, the image forming device 100 described with reference to FIG. 1 to FIG. 2B. In certain embodiments of the present disclosure, referring to the structure shown in FIG. 2A, acquiring consumption increment data from the image forming device may mean, for example, that the consumable chip 210 receives consumption increment data from the image forming device 100 electrically connected thereto via a communication interface. In certain embodiments of the present disclosure, referring to the structure shown in FIG. 2B, obtaining consumption increment data from the image forming device may also mean, for example, that the second consumable chip 220 receives consumption increment data from the image forming device 100 via the first consumable chip 210. In this scenario, the first consumable chip 210 may be a consumable chip that provides basic functions (for example, communication functions), while the second consumable chip 220 may be a consumable chip that performs a communication method according to certain embodiments of the present disclosure.

In certain embodiments of the present disclosure, the consumption increment data includes at least one piece of consumption increment sub-data; or the consumption increment data includes at least one group of consumption increment sub-data group, where the consumption increment sub-data group includes a preset number of pieces of consumption increment sub-data.

In certain embodiments of the present disclosure, the consumption increment data includes at least one piece of consumption increment sub-data and a corresponding sub-data identifier; or the consumption increment data includes at least one group of consumption increment sub-data group and a corresponding sub-data group identifier, where a group of consumption increment sub-data includes a preset number of pieces of consumption increment sub-data, the sub-data group identifier includes a preset number of sub-data identifiers, the sub-data identifier includes an intra-group sequence number identifier, or the sub-data identifier includes a group sequence number identifier and an intra-group sequence number identifier. In certain embodiments, the information processing device may acquire at least one consumption increment sub-data and its corresponding sub-data identifier; or it may acquire at least one consumption increment sub-data group and their corresponding sub-data group identifiers. Specifically, the information processing device may sequentially acquire each consumption increment sub-data and its corresponding sub-data identifier in the consumption increment sub-data group.

It should be understood that the sub-data identifier is used to identify the corresponding consumption increment sub-data in the consumption increment data, so as to more accurately determine the consumption increment status data. The specific form of the sub-data identifier may be numbers, letters or other forms of identifiers, as long as they may identify the corresponding consumption increment sub-data. The present disclosure does not impose restriction on this.

In certain embodiments of the present disclosure, the consumption increment sub-data may be used to indicate consumption information corresponding to a preset task quantity. For example, the consumption increment sub-data may be used to indicate one or more of the following: consumption information corresponding to a predetermined number of print pages (for example, 10 pages), consumption information corresponding to a predetermined print time (for example, 60 seconds), consumption information corresponding to a predetermined amount of developer (for example, toner weight in grams; or toner dots in thousands of dots), and consumption information corresponding to a predetermined photosensitive drum rotation distance (for example, 4000 mm).

It is important to understand that there are several different ways to obtain consumption increment data, which will be discussed in more detail below.

In certain embodiments of the present disclosure, acquiring consumption increment data may include acquiring consumption increment data from the image forming device. Specifically, when the consumption increment data includes at least one consumption increment sub-data and a corresponding sub-data identifier, the information processing device may receive the consumption increment sub-data and the sub-data identifier from the image forming device; or, when the consumption increment data includes at least one group of consumption increment sub-data group and a corresponding sub-data group identifier, the information processing device may receive the group of consumption increment sub-data and the corresponding sub-data group identifier from the image forming device, that is, the information processing device receives a predetermined number of consumption increment sub-data and a predetermined number of sub-data identifiers. It is understood that, in certain embodiments, the information processing device may receive the consumption increment sub-data and the sub-data identifier from the image forming device.

In certain embodiments of the present disclosure, acquiring consumption increment data may include acquiring at least one piece of consumption increment sub-data from the image forming device and determining a sub-data identifier corresponding to each of the at least one piece of consumption increment sub-data. Specifically, the information processing device may obtain the consumption increment sub-data from the image forming device in the following ways: either the information processing device receives the consumption increment sub-data from the image forming device; or the information processing device may determine the consumption increment sub-data from business data in a particular business scenario, which may be obtained from the image forming device. Then, based on the consumption increment sub-data acquired by the information processing device, a sub-data identifier corresponding to the consumption increment sub-data is determined. Specifically, the information processing device may count at least one acquired consumption increment sub-data and determine a sub-data identifier corresponding to each of the at least one consumption increment sub-data based on the counting results. For example, when the information processing device receives each piece of consumption increment sub-data, it may count the data. Based on the first piece of consumption increment sub-data being counted as 1, the sub-data identifier corresponding to the first consumption increment sub-data is determined. Then, based on the second piece of consumption increment sub-data being counted as 2, the sub-data identifier corresponding to the second consumption increment sub-data is determined, and so on. Alternatively, the information processing device may also time the acquisition of at least one consumption increment sub-data, and determine the sub-data identifier corresponding to the at least one consumption increment sub-data based on the timing result. For example, if one piece of consumption increment sub-data may be received every 10 seconds, the information processing device may start timing after receiving the print task start command. When the first consumption increment sub-data is obtained within the preset time range of 10 seconds, the corresponding timing result may be determined, thereby determining the sub-data identifier corresponding to the consumption increment sub-data (for example, it may be recorded as 1). As another example, if one piece of consumption increment sub-data may be received every 10 seconds, the information processing device may determine its corresponding sub-data identifier (for example, it may be recorded as 1) after receiving the first consumption increment sub-data and start timing. When the second piece of consumption increment sub-data is obtained within the preset time range of 10 seconds, the sub-data identifier corresponding to the second consumption increment sub-data may be determined (for example, it may be recorded as 2).

In certain embodiments of the present disclosure, acquiring consumption increment data may include acquiring at least one group of consumption increment sub-data group from the image forming device, and determining a sub-data group identifier corresponding to each of the at least one group of consumption increment sub-data group. Specifically, the information processing device may obtain the consumption increment sub-data group from the image forming device by receiving the consumption increment sub-data group from the image forming device; or the information processing device may determine the consumption increment sub-data group from business data in a particular business scenario, which may be obtained from the image forming device. Then, based on the consumption increment sub-data group obtained by the information processing device, the sub-data group identifier corresponding to the consumption increment sub-data group is determined.

Specifically, the information processing device may count the consumption increment sub-data in at least one consumption increment sub-data group, and determine the sub-data group identifier corresponding to the at least one consumption increment sub-data group based on the counting results. For example, a group of consumption increment sub-data includes 3 pieces of consumption increment sub-data. When the information processing device receives each piece of consumption increment sub-data, it may count them. Based on the fact that the intra-group sequence number identifier corresponding to the first consumption increment sub-data is counted as 1, the corresponding sub-data identifier is determined. Then, the counting continues for the next piece of consumption increment sub-data. When the third piece of consumption increment sub-data is received, its corresponding sub-data identifier may be determined. Thus, the sub-data group identifier corresponding to the set of consumption increment sub-data groups may be determined (that is, including the sub-data identifiers corresponding to all pieces of consumption increment sub-data in the group of consumption increment sub-data). Alternatively, the information processing device may time the consumption increment sub-data in at least one group of consumption increment sub-data group, and determine the sub-data group identifier corresponding to the at least one group consumption increment sub-data group based on the timing results. For example, a group of consumption increment sub-data includes 3 consumption increment sub-data pieces. If one consumption increment sub-data piece may be received every 10 seconds, the information processing device may start timing after receiving the print task start instruction. When the first consumption increment sub-data piece is obtained within the preset time range of 10 seconds, the corresponding timing result may be determined, thereby determining the sub-data identifier corresponding to the consumption increment sub-data. The timing continues. When the second consumption increment sub-data piece is obtained within the preset time range of 20 seconds, its corresponding sub-data identifier may be determined. When the third consumption increment sub-data piece is obtained within the preset time range of 30 seconds, its corresponding sub-data identifier may be determined. Then, the sub-data group identifier corresponding to this consumption increment sub-data group may be determined. For example, a consumption increment sub-data group includes 3 consumption increment sub-data pieces. If one consumption increment sub-data piece may be received every 10 seconds, the information processing device may determine its corresponding sub-data identifier after receiving the first consumption increment sub-data piece and start timing. When the second consumption increment sub-data piece is obtained within the preset time range of the 10th second, the sub-data identifier corresponding to the second consumption increment sub-data piece may be determined. When the third consumption increment sub-data piece is obtained within the preset time range of the 20th second, the sub-data identifier corresponding to the third consumption increment sub-data piece may be determined. Thus, the corresponding sub-data group identifier of the consumption increment sub-data group may be obtained.

In practical implementations, image forming devices may use multiple different statistical methods to obtain different consumption increment data for the same consumables to meet the business needs of different scenarios. For example, if the consumable is toner, in scenario 1, the image forming device counts the toner consumption increment data 1; in scenario 2, the image forming device counts the toner consumption increment data 2, and transmits both the toner consumption increment data 1 and consumption increment data 2 to a processing cartridge, which may include an information processing unit. The information processing device may directly use the consumption increment data 2 to perform business processing in scenario 2, or it may determine the consumption increment data 2 based on the consumption increment data 1 (the consumption increment data 1 is an implementation of the associated data of the consumption increment data 2), and then use the consumption increment data 2 to perform business processing in scenario 2.

In certain embodiments of the present disclosure, the consumption increment sub-data acquired by the information processing device may be determined based on the consumption information of the consumable materials corresponding to the preset task quantity in the print task, as above. The preset task quantity may be, for example, a predetermined number of pages to print (for example, 10 pages), a predetermined print time (for example, 60 seconds), a predetermined developer consumption (for example, toner weight, unit: grams; or, toner dots, unit: thousand dots), and one or more of the following corresponding to a predetermined photosensitive drum rotation distance. In other words, the consumption increment sub-data may at least indicate the amount of consumable materials consumed. The consumption increment sub-data includes the consumption increment sub-data of consumable materials in the print task that is equal to or less than the preset task quantity. Specifically, if the preset task quantity is a predetermined number of pages to print (for example, 10 pages), then the consumption increment sub-data may be the consumption amount of consumable materials corresponding to 10 pages, or the consumption amount of consumable materials corresponding to less than 10 pages.

In certain embodiments of the present disclosure, during the process of synchronizing consumption information of the consumable material between the image forming device and the information processing device, the image forming device transmits consumption increment sub-data to the information processing device. The following will further describe different methods by which the image forming device transmits consumption increment sub-data.

Transmission method 1: transmitting consumption increment sub-data piece by piece

In certain embodiments of the present disclosure, the image forming device transmits one consumption increment sub-data piece for each preset task quantity of print task.

Furthermore, the consumption increment data includes at least one piece of consumption increment sub-data and a corresponding sub-data identifier. Taking the consumption increment data including two consumption increment sub-data pieces and corresponding sub-data identifiers as an example, refer to Table 1 below. Table 1 shows the information of the consumption increment sub-data and sub-data identifiers included in the consumption increment data of certain embodiments.

**Table 1**

| Sub-data identifier | Consumption increment sub-data |
|---|---|
| id1 | d1 |
| id2 | d2 |

In Table 1, id1 and id2 are sub-data identifiers, and d1 and d2 are consumption increment sub-data, used to indicate the consumption amount of materials. id1 is the sub-data identifier corresponding to d1, and id2 is the sub-data identifier corresponding to d2. In certain embodiments of the present disclosure, the aforementioned sub-data identifier and the corresponding consumption increment sub-data may be included in a write instruction and transmitted to the information processing device. That is, the information processing device obtains the consumption increment data from the image forming device. Specifically, the image forming device may transmit two write instructions to the information processing device, each write instruction containing a consumption increment sub-data and a corresponding sub-data identifier. The information processing device may obtain the write instructions from the image forming device and then determine the consumption increment sub-data and the corresponding sub-data identifier based on the write instructions. In certain embodiments of the present disclosure, the information processing device may first acquire the consumption increment sub-data from the image forming device, and then determine the corresponding sub-data identifier of the consumption increment sub-data according to a counting or timing method.

More specifically, the timing of when the image forming device transmits a consumption increment sub-data piece may be configured according to particular business needs. In certain embodiments of the present disclosure, the preset task quantity includes one preset sub-task quantity or a combination of multiple preset sub-task quantities. For example, if the preset task quantity is 10 pages, and the image forming device needs to perform a total of 20 pages in a print task, the image forming device transmits a consumption increment sub-data piece to the information processing device for a print task of every 10 pages. After completing the print task of 20 pages, the image forming device has transmitted a total of two consumption increment sub-data pieces to the information processing device. For example, if the preset task quantity is 10 pages and the print time is 30 seconds, the image forming device first executes the 10-page print task, transmits the first consumption increment sub-data piece to the information processing device, then prints the remaining print task for 30 seconds, and then transmits the second consumption increment sub-data piece to the information processing device. This process is repeated until the entire print task is completed.

In certain embodiments of the present disclosure, the image forming device may configure a transmission strategy for consumption increment sub-data piece based on the total task quantity of the print task. For example, if the total task quantity is greater than or equal to a preset total task threshold (for example, a preset total task quantity threshold of 100 pages), the consumption increment sub-data may be transmitted once at a first preset sub-task quantity (for example, a preset sub-task quantity of 10 pages, or a preset sub-task quantity of 30 seconds). If the total task quantity is less than the preset total task quantity threshold (for example, a preset total task quantity threshold of 100 pages), the consumption increment sub-data may be transmitted once at a second preset sub-task quantity (for example, a preset sub-task quantity of 5 pages, or a preset sub-task quantity of 15 seconds).

In certain embodiments of the present disclosure, the consumption increment sub-data includes: consumption increment sub-data of consumable materials in a print task that is equal to or less than a preset task quantity. In certain embodiments of the present disclosure, if the total task quantity of a print task is greater than or equal to a preset task quantity, for example, for a total task quantity of 105 pages, if the preset task quantity is set to 10 pages, then the consumption increment data may include multiple consumption increment sub-data pieces, and the information processing device may acquire the consumption increment sub-data corresponding to the preset task quantity. For example, the consumption increment sub-data may refer to the consumption increment sub-data d1, d2, ..., d10 of the consumable material corresponding to the preset task quantity, where each of the above consumption increment sub-data indicates the consumption amount of the consumable material corresponding to 10 pages. In addition, the consumption increment sub-data may also refer to the consumption increment sub-data d11 of the consumable material corresponding to the print task with a less than the preset task quantity, where the above consumption increment sub-data d11 indicates the consumption amount of the consumable material corresponding to 5 pages. Thus, the consumption increment sub-data d1, d2, ..., d11 indicate the consumption increment of consumable material corresponding to a total of 105 pages. In certain embodiments of the present disclosure, if the total task quantity of a print task is less than a preset task quantity, for example, for a total task quantity of 8 pages, if the preset task quantity is set to 10 pages, the consumption increment data may include one piece of consumption increment sub-data. In this scenario, the consumption increment sub-data refers to the consumption increment sub-data d1 of consumable material corresponding to the print task with a task quantity less than the preset task quantity. Thus, the consumption increment sub-data d1 indicates the consumption of consumable material corresponding to a total of 8 pages.

In addition, if a print task includes multiple print jobs and each print job has a small workload, the print jobs may be merged to meet the preset task quantity before transmitting the consumption increment sub-data. For example, taking the transmission of consumption increment sub-data every 10 pages as an example, the workload of print job 1 is 3 pages, the workload of print job 2 is 3 pages, and the workload of print job 3 is 5 pages; when print job 3 is executed, the preset task quantity of 10 pages is met, and a consumption increment sub-data (for example, the consumption increment sub-data of the consumable material corresponding to the preset task quantity) is triggered to be transmitted. When print job 3 is completed, the remaining consumption increment sub-data (for example, the consumption increment sub-data of the consumable material corresponding to the preset task quantity) is transmitted to synchronize the information to the information processing device.

In certain embodiments of the present disclosure, if the print task includes multiple print jobs and each print job has a small workload, the consumption increment sub-data corresponding to the multiple print jobs may be transmitted separately. Taking the transmission of consumption increment sub-data every 10 pages as an example. For instance, if each print job is less than the preset task quantity, assuming print job 1 has 8 pages, print job 2 has 5 pages, and print job 3 has 4 pages; then executing print job 1, print job 2, and print job 3 may trigger consumption increment sub-data once each (for example, consumption increment sub-data of the consumable materials corresponding to the less than the preset task quantity). For example, if some print jobs have a workload greater than or equal to the preset task quantity, while others have a workload less than the preset task quantity, assuming print job 1 has a workload of 15, print job 2 has a workload of 10, and print job 3 has a workload of 4, then when executing print job 1, the image forming device may synchronize the consumption increment sub-data (including the consumption increment sub-data corresponding to pages 1-10 and 11-15) of print job 1 to the information processing device in two steps. When executing print job 2, the consumption increment sub-data corresponding to pages 10 of print job 2 may be directly synchronized to the information processing device. When executing print job 3, the consumption increment sub-data corresponding to 4 pages of print job 3 may be directly synchronized to the information processing device. In the above embodiments, determining the triggering time for consumption increment sub-data according to a single print job and a preset task quantity may synchronize the consumption of increment sub-data more timely, further improving the reliability of synchronizing consumption information between the image forming device and the information processing device, and reducing the situation where the information processing device fails to synchronize the latest consumption information in a timely manner due to abnormal factors such as power outages.

Alternatively, in certain embodiments of the present disclosure, the image forming device may configure a timing for transmitting consumption increment sub-data based on the execution time of the print task. For example, at predetermined print intervals (for example, a predetermined print interval of 60 seconds), a consumption increment sub-data of the actual print quantity for the corresponding time duration is transmitted to the information processing device. Furthermore, if a print task includes multiple print jobs and the print time of each print job is less than the predetermined print time, the multiple print jobs may be merged, and the consumption increment sub-data may be transmitted only when the actual print time meets the predetermined print time.

In certain embodiments of the present disclosure, if a print task includes multiple print jobs and the print time of some print jobs is less than the predetermined print time, then the consumption increment sub-data corresponding to the aforementioned partial print jobs may be transmitted separately. Specific transmitting examples may be found in the description of transmitting according to the predetermined number of pages printed, and will not be repeated here.

Similarly, in certain embodiments of the present disclosure, the image forming device may configure the timing of transmitting a consumption increment sub-data according to the developer consumption amount or the rotation distance of the photosensitive drum corresponding to the print task.

It should be noted that regardless of whether the timing of transmitting a consumption increment sub-data is configured based on the predetermined number of pages to be printed, the predetermined print time, the predetermined amount of developer consumed, and/or the predetermined rotation distance of the photosensitive drum, the consumption information of the consumable material indicated by the consumption increment sub-data itself may be characterized in the same form. For example, when transmitting consumption increment sub-data according to the predetermined number of pages to be printed, the specific consumption information may be characterized by the page number information. The consumption information of consumable materials indicated by the consumption increment sub-data itself may also be represented in different forms. For example, when the consumption increment sub-data is transmitted according to the predetermined print time, the specific consumption information may be represented by the page number information; similarly, when the consumption increment sub-data is transmitted according to the predetermined number of printed pages, the specific consumption information may be represented by the developer consumption. It is easy to understand that the combination of the timing of transmitting the consumption increment sub-data and the representation method of the consumption information indicated by the consumption increment sub-data itself is not limited to the above, but includes any combination of the two.

Transmission method 2: transmitting consumption increment sub-data in groups

In certain embodiments of the present disclosure, the image forming device transmits a group of consumption increment sub-data every time it performs a plurality of preset task quantity of print tasks. During the transmission of a group of consumption increment sub-data, the image forming device may transmit a corresponding sub-data group identifier. A group of consumption increment sub-data group includes a predetermined number of pieces of consumption increment sub-data, and the sub-data group identifier includes a predetermined number of sub-data identifiers. The sub-data identifier includes an intra-group sequence number identifier, or the sub-data identifier includes both a group sequence number identifier and an intra-group sequence number identifier. In other words, the image forming device groups the consumption increment sub-data transmitted to the information processing device. As described above in the first method of transmitting consumption increment sub-data, the image forming device may include the consumption increment sub-data and the sub-data identifier in a single write instruction and transmit it to the information processing device. It should be understood that, during the process of transmitting a group of consumption increment sub-data, the image forming device may transmit multiple pieces of consumption increment sub-data one by one to the information processing device in the manner described in the first method of transmitting consumption increment sub-data. Similarly, the sub-data identifier may be transmitted to the information processing device along with the consumption increment sub-data. When the image forming device has finished transmitting a predetermined number of consumption increment sub-data pieces in a group of consumption increment sub-data group and a predetermined number of sub-data identifiers in a group of sub-data group identifiers, the information processing device may obtain the corresponding group of consumption increment sub-data group and sub-data group identifiers.

In certain embodiments of the present disclosure, the sub-data identifier includes an intra-group sequence number identifier. For example, if every 3 consumption increment sub-data pieces and the corresponding 3 sub-data identifiers are grouped together, then the consumption increment sub-data group includes 3 consumption increment sub-data pieces, and the sub-data group identifier includes 3 sub-data identifiers. See Table 2 below. Table 2 shows the information of consumption increment data in certain embodiments. The consumption increment data includes two groups of consumption increment sub-data group and the corresponding sub-data group identifiers.

**Table 2**

| | Sub-data identifier (intra-group sequence number identifier) | Consumption increment sub-data |
|---|---|---|
| Group1 | id1 | d1 |
| | id2 | d2 |
| | id3 | d3 |
| Group2 | id4 | d4 |
| | id5 | d5 |
| | id6 | d6 |

In Table 2, the sub-data group identifiers corresponding to the first group (Group1) may include sub-data identifiers id1, id2, and id3. id1, id2, and id3 may also be understood as the intra-group sequence number identifiers corresponding to the first group of sub-data identifiers. The consumption increment sub-data group corresponding to the first group may include consumption increment sub-data d1, d2, and d3. The sub-data group identifiers corresponding to the second group (Group2) may include sub-data identifiers id4, id5, and id6. id4, id5, and id6 may also be understood as the intra-group sequence number identifiers corresponding to the second group of sub-data identifiers. The consumption increment sub-data group corresponding to the second group may include consumption increment sub-data d4, d5, and d6.

In certain embodiments of the present disclosure, the sub-data identifier includes a group sequence number identifier and an intra-group sequence number identifier. For example, if every 5 consumption increment sub-data pieces and the corresponding 5 sub-data identifiers are grouped together, then the consumption increment sub-data group includes 5 consumption increment sub-data pieces, and the sub-data group identifier includes 5 sub-data identifiers. See Table 3 below. Table 3 shows the consumption increment data information of certain embodiments, which includes two groups of consumption increment sub-data and the corresponding sub-data group identifiers.

**Table 3**

| | Sub-data identifier | | Consumption increment sub-data |
|---|---|---|---|
| | Group sequence number identifier | Intra-group sequence number identifier | |
| Group1 | Gid1 | id1 | d1 |
| | Gid1 | id2 | d2 |
| | Gid1 | id3 | d3 |
| | Gid1 | id4 | d4 |
| | Gid1 | id5 | d5 |
| Group2 | Gid2 | id1 | d6 |
| | Gid2 | id2 | d7 |
| | Gid2 | id3 | d8 |
| | Gid2 | id4 | d9 |
| | Gid2 | id5 | d10 |

In Table 3, the group sequence number identifier is an identifier that indicates the sub-data identifier in a group of sub-data group identifiers relative to the sub-data identifiers in other groups, such as Gid1 and Gid2. The intra-group sequence number identifier is an identifier that indicates the sub-data identifier within a group relative to other sub-data identifiers, such as id1, id2, id3, id4, and id5. The intra-group sequence number identifier is associated with the corresponding group sequence number identifier. Specifically, the sub-data group identifiers corresponding to the first group (Group1) may include sub-data identifiers (Gid1, id1), (Gid1, id2), (Gid1, id3), (Gid1, id4), and (Gid1, id5), and the corresponding consumption increment sub-data groups may include consumption increment sub-data d1, d2, d3, d4, and d5; the sub-data group identifiers corresponding to the second group (Group2) may include sub-data identifiers (Gid2, id1), (Gid2, id2), (Gid2, id3), (Gid2, id4), and (Gid2, id5), and the corresponding consumption increment sub-data groups may include consumption increment sub-data d6, d7, d8, d9, and d10. In certain embodiments of the present disclosure, the image forming device may transmit the consumption increment sub-data in each group of consumption increment sub-data group and the corresponding sub-data identifier to the information processing device. For example, the image forming device may transmit the sub-data identifier (Gid1, id1) and the consumption increment sub-data d1 together to the information processing device. Specifically, the sub-data identifier (Gid1, id1) and the corresponding consumption increment sub-data d1 may be included in a write instruction and transmitted to the information processing device. It is worth noting that sub-data identifiers within a group of sub-data identifiers may be transmitted in the order of their intra-group sequence numbers. For example, the first group of sub-data identifiers may be transmitted in the order (Gid1, id1), (Gid1, id2), (Gid1, id3), (Gid1, id4), and (Gid1, id5). Alternatively, the sub-data identifiers within a group of sub-data identifiers may be transmitted in any random order rather than the order of their intra-group sequence numbers, such as (Gid1, id2), (Gid1, id4), (Gid1, id1), (Gid1, id5), and (Gid1, id3).

In certain embodiments of the present disclosure, the sub-data identifiers in a group of sub-data group identifiers may also be transmitted in a particular order, such as (Gid1, id1), (Gid1, id3), (Gid1, id5), (Gid1, id7), (Gid1, id9).

It should be understood that the transmitting order of each sub-data identifier in the sub-data group identifier may be set according to actual needs, and certain embodiments do not impose particular restrictions.

In certain embodiments of the present disclosure, the image forming device sequentially transmits corresponding consumption increment sub-data according to the consumption information of consumable materials updated during the execution of the print task. This may synchronize the consumption increment data to the information processing device, thereby realizing timely and reliable synchronization of consumable material consumption information between the image forming device and the information processing device.

More specifically, in certain embodiments of the present disclosure, the sub-data identifier and the corresponding consumption increment sub-data may be included in a write instruction, according to the transmission strategy of transmitting one write instruction every 10 pages and transmitting 5 instructions per group. If the total print task is less than 50 pages, 5 instructions are still transmitted. For example, when the total number of pages to be printed is 40, the insufficient part (for example, the 5th instruction) may be filled with 0 for the consumption increment sub-data, and the sub-data identifier will also be transmitted together. Specifically, when the sub-data identifier includes the group sequence number identifier and the intra-group sequence number identifier, the 5th write instruction may include the sub-data identifier (Gid1, id5) and the corresponding consumption increment sub-data d5, where Gid1 is the group sequence number identifier, id5 is the intra-group sequence number identifier, and d5 indicates a consumption of 0. Similarly, if the total number of pages to be printed is 45, then the consumption increment sub-data d5 indicates a consumption of 5 pages. In the above embodiment, it may be ensured that a group of consumption increment sub-data group includes a predetermined number of consumption increment sub-data pieces. During the execution of a print task, the image forming device may transmit consumption increment sub-data and corresponding sub-data identifiers to the information processing device one by one. For example, when the total print task is 140 pages, following the rule of transmitting one write instruction (including sub-data identifier and consumption increment sub-data) every 10 pages, with 5 instructions transmitted in each group, the first group may transmit the write instructions corresponding to pages 1-50. For example, the 5 write instructions transmitted sequentially in the first group may include (Gid1, id2, d2), (Gid1, id4, d4), (Gid1, id1, d1), (Gid1, id5, d5), and (Gid1, id3, d3), where d2, d4, d1, d5, and d3 correspond to the consumption of pages 1-10, 11-20, 21-30, 31-40, and 41-50, respectively. Similarly, the second group of write instructions corresponding to tasks of pages 51-100 may be transmitted. For example, the five write instructions transmitted sequentially in the second group may include (Gid2, id3, d3), (Gid2, id4, d4), (Gid2, id1, d1), (Gid2, id5, d5), and (Gid2, id2, d2). The third group may transmit write instructions corresponds to tasks of pages 101-140. For example, the five write instructions transmitted sequentially in the third group may include (Gid3, id1, d1), (Gid3, id4, d4), (Gid3, id3, d3), (Gid3, id5, d5), and (Gid3, id2, d2). The fifth write instruction in the third group contains the consumption increment sub-data d2, indicating that the consumption is 0 pages. It should be noted that, in the example shown in certain embodiments, the sub-data identifiers in a group of sub-data group identifiers may be transmitted out of order, and the transmission order of the consumption increment sub-data is based on the order of the actual consumption of the corresponding consumable materials in the print task.

In certain embodiments of the present disclosure, the write instruction may include not only the consumption increment sub-data and the corresponding sub-data identifier, but also other information such as the target address. The target address is used to identify the address of the target slave device (for example, the target information processing device) for communication.

In certain embodiments of the present disclosure, after receiving the consumption increment sub-data and the sub-data identifier, the information processing device may store the consumption increment sub-data and the sub-data identifier. After the image forming device completes the transmission of a group of consumption increment sub-data, it may transmit a group of completion flags, so that the information processing device may determine that the transmission of the group of consumption increment sub-data group is complete and determine whether the data it has received is complete. Specifically, the information processing device may determine whether the data it receives is complete by judging the number of sub-data identifiers it receives and the number of pieces of consumption increment sub-data.

In certain embodiments of the present disclosure, similar to the embodiment described above where one write instruction is transmitted every 10 pages, the image forming device may also transmit one write instruction every 10 seconds, with 5 instructions transmitted per group. If the total print time for the print task is less than 50 seconds, 5 instructions are still transmitted. For example, if the total print time for the print task is 40 seconds, the insufficient part (for example, the 5th instruction) of the consumption increment sub-data is filled with 0, and the sub-data identifier is also transmitted together. Specifically, when the sub-data identifier includes a group sequence number identifier and an intra-group sequence number identifier, the 5th write instruction may include the sub-data identifier (Gid1, id5) and the corresponding consumption increment sub-data d5, where Gid1 is the group sequence number identifier, id5 is the intra-group sequence number identifier, and d5 indicates a consumption of 0. Similarly, if the total print time for the print task is 45 seconds, the consumption increment sub-data d5 indicates the consumption for 5 seconds. During the print task execution, the image forming device may transmit the consumption increment sub-data and its corresponding sub-data identifier to the information processing device one by one. For example, if the total print time is 140 seconds, following the rule of transmitting one write instruction every 10 seconds, with each group transmitting 5 instructions, the first group may transmit write instructions corresponding to task of 1 to 50 seconds. For example, the 5 write instructions transmitted sequentially in the first group may include (Gid1, id2, d2), (Gid1, id4, d4), (Gid1, id1, d1), (Gid1, id5, d5), and (Gid1, id3, d3), where d2, d4, d1, d5, and d3 correspond to the consumption time of 1-10 seconds, 11-20 seconds, 21-30 seconds, 31-40 seconds, and 41-50 seconds, respectively. Similarly, the second group may transmit write instructions corresponding to task of 51-100 seconds, for example, the 5 write instructions transmitted sequentially in the second group may include (Gid2, id3, d3), (Gid2, id4, d4), (Gid2, id1, d1), (Gid2, id5, d5), (Gid2, id2, d2). The third group may transmit write instructions corresponding to task of 101 to 140 seconds. For example, the 5 write instructions transmitted sequentially in the third group may include (Gid3, id1, d1), (Gid3, id4, d4), (Gid3, id3, d3), (Gid3, id5, d5), (Gid3, id2, d2). The fifth write instruction in the third group contains the consumption increment sub-data d2, indicating that the consumption is 0.

It should be noted that when the image forming device performs a print task, it may be divided into one or more pieces of consumption increment sub-data. For example, a piece of consumption increment sub-data is transmitted for each print task with a preset task quantity. Understandably, as the print task progresses, the information processing device may promptly receive several consumption increment sub-data pieces and update consumable materials' consumption information (such as the remaining amount or consumed amount of consumables) in a timely manner, thereby achieving timely synchronization of consumption information updates. In addition, after receiving the consumption increment sub-data, the information processing device may more precisely identify whether there are any abnormalities in the transmission of the consumption increment sub-data, which facilitates the rapid determination of the consumption increment status data reflecting the status of the consumption increment data. This helps ensure the integrity and reliability of the transmission of consumption increment data between the image forming device and the information processing device, and enables more refined management of consumption information. In addition, the information processing device may receive a piece of consumption increment sub-data every print task of preset task quantity. This may avoid excessively frequent data synchronization between the image forming device and the information processing device, and ensure the timeliness and reliability of consumption information synchronization. It may be applied to different image forming scenarios.

After acquiring the consumption increment data at step S401, the method executed by the information processing device proceeds to step S402.

At step S402, based on the consumption increment data, the cumulative consumption increment data and/or consumption increment status data of the consumable materials corresponding to the print task are determined.

In certain embodiments of the present disclosure, when the image forming device transmits consumption increment sub-data in the manner described in method one or method two, the information processing device determines consumption increment status data based on one or more of the consumption amount indicated by the consumption increment sub-data, the sub-data identifier, and the reception time of the consumption increment data. The consumption increment status data is used to indicate whether the consumption increment sub-data is normal sub-data or abnormal sub-data, and/or whether the sub-data identifier corresponding to the consumption increment sub-data is a normal identifier or an abnormal identifier.

In the above embodiments, when the image forming device synchronizes consumption information to the information processing device, it may be subject to interference from various factors, leading to data loss or errors, for example, data anomalies. By synchronizing data according to the method of synchronizing consumption increment sub-data, the information processing device may more promptly determine anomalies in the received data, facilitating subsequent corrective processing when anomalies occur. This ensures the integrity and accuracy of data transmission. Moreover, the information processing device may quickly determine whether any abnormality has occurred for each piece of consumption increment sub-data, enabling more refined abnormality detection and rapid determination of the consumption increment status data. For example, the information processing device may quickly locate whether a certain consumption increment sub-data is normal or abnormal, or locate whether the sub-data identifier corresponding to a certain consumption increment sub-data is a normal identifier or an abnormal identifier.

It should be understood that, in certain embodiments of the present disclosure, the consumption increment data includes at least one piece of consumption increment sub-data and a corresponding sub-data identifier; or the consumption increment data includes at least one group of consumption increment sub-data and a corresponding sub-data group identifier, where the consumption increment sub-data group includes a predetermined number of consumption increment sub-data pieces, and the sub-data group identifier includes a predetermined number of sub-data identifiers. In other words, each piece of consumption increment sub-data has a corresponding sub-data identifier. By marking consumption increment sub-data with sub-data identifiers, fine-grained abnormality detection may be achieved. This allows the information processing device to distinguish different consumption increment sub-data, accurately locate consumption increment sub-data with abnormalities, and facilitate data management. The corresponding consumption increment sub-data may be coupled simply by using the sub-data identifier. For example, when the received sequence number jumps, duplicates, or is lost, the information processing device may immediately identify the possible abnormality in the data transmission process, providing a basis for subsequent fine-grained abnormality judgment. For example, when a print job corresponding to a certain print task encounters an abnormality during data synchronization, the information processing device may quickly identify which consumption increment sub-data in the print job is abnormal. Compared to only being able to determine that the entire print job is abnormal, the abnormality judgment of the present solution is more precise. When some consumption increment sub-data in the entire print job is abnormal, the image forming device does not need to correct the data of the entire print job. It may only perform corresponding correction processing on the abnormal consumption increment sub-data, which may reduce the amount of data processing and improve the transmission efficiency of subsequent consumption correction data.

Specifically, in certain embodiments of the present disclosure, if the consumption amount indicated by the consumption increment sub-data is not within a predetermined consumption range, the consumption increment sub-data is determined to be abnormal sub-data, and/or the sub-data identifier corresponding to the consumption increment sub-data is determined to be an abnormal identifier. The predetermined consumption range may be set according to actual circumstances.

If the image forming device transmits consumption increment sub-data in the above-described transmission method one, for example, if the sub-data identifier is id2, the corresponding consumption increment sub-data is d2, and the predetermined consumption range is the consumption range corresponding to a 10-page print task, if the consumption indicated by the consumption increment sub-data d2 is not within the predetermined consumption range, then the consumption increment sub-data id2 is determined to be abnormal sub-data, and the sub-data identifier id2 corresponding to the consumption increment sub-data d2 is determined to be an abnormal identifier. Alternatively, only the consumption increment sub-data d2 may be determined to be abnormal sub-data; or only the sub-data identifier id2 may be determined to be an abnormal identifier.

For example, if the sub-data identifier is id3, the corresponding consumption increment sub-data is d3, and the predetermined consumption range is the consumption range corresponding to a 10-second print task, if the consumption increment sub-data d3 indicates a consumption range not within the predetermined consumption range, then the consumption increment sub-data d3 is determined to be an abnormal sub-data, and the sub-data identifier id3 corresponding to consumption increment sub-data d3 is also determined to be an abnormal identifier. Alternatively, only the consumption increment sub-data d3 may be determined to be an abnormal sub-data; or, only the sub-data identifier id3 may be determined to be an abnormal identifier.

If the image forming device transmits the consumption increment sub-data in the manner described in method 2 above. In certain embodiments of the present disclosure, when the sub-data identifier includes a group sequence number identifier and an intra-group sequence number identifier, for example, for consumption increment sub-data d2 and sub-data identifier (Gid1, id2); if the predetermined consumption range is the consumption range corresponding to a 10-page print task, if the consumption indicated by consumption increment sub-data d2 is not within the predetermined consumption range, then consumption increment sub-data d2 is determined to be abnormal sub-data, and the sub-data identifier (Gid1, id2) corresponding to consumption increment sub-data d2 is an abnormal identifier. Alternatively, only the consumption increment sub-data d2 may be identified as an abnormal sub-data; or only the sub-data identifier (Gid1, id2) may be identified as an abnormal identifier. Alternatively, when the sub-data identifier includes an intra-group sequence number identifier, for example, for consumption increment sub-data d2 and sub-data identifier id2; if the consumption amount indicated by consumption increment sub-data d2 is not within the predetermined consumption range, then consumption increment sub-data d2 is identified as an abnormal sub-data, and the corresponding sub-data identifier id2 is also identified as an abnormal identifier. Alternatively, it may be possible to identify only the consumption increment sub-data d2 as an abnormal sub-data; or, it may be possible to identify only the sub-data identifier id2 as an abnormal identifier.

In certain embodiments of the present disclosure, when the sub-data identifier includes a group sequence number identifier and an intra-group sequence number identifier, for the consumption increment sub-data d3 and the sub-data identifier (Gid1, id3); if the predetermined consumption range is the consumption range corresponding to a 10-second print task, if the consumption indicated by the consumption increment sub-data d3 is not within the predetermined consumption range, the consumption increment sub-data d3 is determined to be abnormal sub-data, and the sub-data identifier (Gid1, id3) corresponding to the consumption increment sub-data d3 is an abnormal identifier. Alternatively, only the consumption increment sub-data d3 may be identified as an abnormal sub-data; or only the sub-data identifier (Gid1, id3) may be identified as an abnormal identifier. Alternatively, when the sub-data identifier includes an intra-group sequence number identifier, for example, for consumption increment sub-data d2 and sub-data identifier id2; if the consumption amount indicated by consumption increment sub-data d2 is not within the predetermined consumption range, then consumption increment sub-data d2 is identified as an abnormal sub-data, and the corresponding sub-data identifier id2 is also identified as an abnormal identifier. Alternatively, it may be possible to identify only the consumption increment sub-data d2 as an abnormal sub-data; or, it may be possible to identify only the sub-data identifier id2 as an abnormal identifier.

In certain embodiments of the present disclosure, when multiple sub-data identifiers are in a non-consecutive state, the consumption increment sub-data corresponding to the sub-data identifiers missing from the consecutive state is determined to be abnormal sub-data, and/or the missing sub-data identifier is determined to be an abnormal identifier.

For example, if the image forming device transmits the consumption increment sub-data in transmission method one described above, the information processing device consecutively receives the consumption increment sub-data and the corresponding sub-data identifier. If id1 and id3 are received in sequence, since multiple sub-data identifiers id1 and id3 are in a non-consecutive state, the consumption increment sub-data d2 corresponding to the missing sub-data identifier id2 relative to the consecutive state (id1, id2, id3) is determined to be abnormal sub-data, and the missing sub-data identifier id2 is an abnormal identifier. Alternatively, it may be possible to identify only the consumption increment sub-data d2 as an abnormal sub-data; or, it may be possible to identify only the sub-data identifier id2 as an abnormal identifier.

For example, if the image forming device transmits the consumption increment sub-data in transmission method 2 described above, the information processing device may consecutively receive the consumption increment sub-data in a group of consumption increment sub-data and the sub-data identifiers in a group of sub-data identifiers. When the sub-data identifiers include the intra-group sequence number identifier, assuming that one group of sub-data identifiers includes three sub-data identifiers (id1, id2, id3), if the sub-data identifiers received by the information processing device are id1 and id3, then the consumption increment sub-data d2 corresponding to the missing sub-data identifier id2 relative to the consecutive state (id1, id2, id3) is determined to be abnormal sub-data, and the missing sub-data identifier id2 is determined to be an abnormal identifier. Alternatively, it may be possible to identify only the consumption increment sub-data d2 as an abnormal sub-data; or, it may be possible to identify only the sub-data identifier id2 as an abnormal identifier.

Specifically, in certain embodiments of the present disclosure, if the sub-data identifier included in the last received consumption increment data is different from the last sub-data identifier included in the print task end instruction transmitted by the image forming device, the missing sub-data identifier is determined to be an abnormal identifier, and/or the consumption increment sub-data corresponding to the missing sub-data identifier is abnormal sub-data, where the missing sub-data identifier includes the last sub-data identifier, or the last sub-data identifier and the missing sub-data identifier between the last sub-data identifier and the sub-data identifier included in the last received consumption increment data. It should be understood that certain embodiments may be applied to the technical solutions of transmission method 1 or transmission method 2 as appropriate.

For example, if the last received consumption increment data includes a sub-data identifier id4, and the last sub-data identifier included in the print task end instruction transmitted by the image forming device is id5, then the missing sub-data identifier id5 is determined to be an abnormal identifier, and the consumption increment sub-data d5 corresponding to the missing sub-data identifier id5 is also determined to be abnormal sub-data. Alternatively, only the consumption increment sub-data d5 may be determined to be abnormal sub-data; or, only the sub-data identifier id5 may be determined to be abnormal identifier.

For example, if the last received consumption increment data includes sub-data identifier id3, and the last sub-data identifier included in the print task end instruction transmitted by the image forming device is id5, then the missing sub-data identifiers id4 and id5 are determined to be abnormal identifiers, and the consumption increment sub-data d4 and d5 corresponding to the missing sub-data identifiers id4 and id5 are abnormal sub-data. Alternatively, only the consumption increment sub-data d4 and d5 may be determined to be abnormal sub-data; or, only the sub-data identifiers id4 and id5 may be determined to be abnormal identifiers.

Specifically, in certain embodiments of the present disclosure, the information processing device may determine that the missing sub-data identifier is an abnormal identifier based on whether the sub-data identifiers are consecutive and based on the combination of the sub-data identifiers included in the last received consumption increment data and the last sub-data identifier included in the print task end instruction, and/or that the consumption increment sub-data corresponding to the missing sub-data identifiers is abnormal sub-data. For example, during the execution of a print task by the image forming device, the image forming device sequentially transmits multiple consumption increment sub-data d1, d2, d3, d4, d5 and their corresponding sub-data identifiers id1, id2, id3, id4, id5. The sub-data identifiers received consecutively by the information processing device are id1, id3, and id4, where id4 is the sub-data identifier of the last received consumption increment data, and the last sub-data identifier included in the print task end instruction transmitted by the image forming device is id5. Therefore, the missing sub-data identifiers id2 and id5 are determined to be abnormal identifiers, and the consumption increment sub-data d2 and d5 corresponding to the missing sub-data identifiers id2 and id5 are abnormal sub-data. Alternatively, it is possible to identify only the consumption increment sub-data d2 and d5 as abnormal sub-data; or, it is possible to identify only the sub-data identifiers id2 and id5 as abnormal identifiers.

Specifically, in certain embodiments of the present disclosure, if no consumption increment data is received within a predetermined receiving time range, the corresponding consumption increment sub-data is determined to be abnormal sub-data, and/or the corresponding sub-data identifier is determined to be an abnormal identifier. The predetermined receiving time range may be set according to actual circumstances.

If the image forming device transmits the consumption increment sub-data in transmission method 1 described above, for example, if the information processing device may receive a write instruction from the image forming device every predetermined receiving time (for example, 10 milliseconds), then correspondingly, the information processing device may receive one consumption increment sub-data piece every 10 milliseconds. If the predetermined receiving time range is 10 milliseconds to 15 milliseconds, and if no consumption increment sub-data is received after an interval of 20 milliseconds following the receipt of consumption increment sub-data d1, then the consumption increment sub-data d2 that should have been received is considered lost, thereby determining that the corresponding consumption increment sub-data d2 is abnormal sub-data, and the corresponding sub-data identifier id2 is an abnormal identifier. Alternatively, it may be possible to identify only the consumption increment sub-data d2 as an abnormal sub-data; or, it may be possible to identify only the sub-data identifier id2 as an abnormal identifier.

If the image forming device transmits the consumption increment sub-data in transmission method 2 described above, for example, in the case of transmitting write instructions in groups and sequentially, the information processing device may receive one write instruction from the image forming device every predetermined receiving time (for example, 10 milliseconds). Correspondingly, the information processing device may receive one consumption increment sub-data every 10 milliseconds, if the predetermined receiving time range is 10 milliseconds to 15 milliseconds. In certain embodiments of the present disclosure, when the sub-data identifier includes a group sequence number identifier and an intra-group sequence number identifier, if no consumption increment sub-data is received after a 20-millisecond interval following the receipt of consumption increment sub-data d1, it is considered that the consumption increment sub-data d2 that should have been received has been lost, thereby determining that the corresponding consumption increment sub-data d2 is abnormal sub-data, and the corresponding sub-data identifier (Gid1, id2) is an abnormal identifier. Alternatively, only the consumption increment sub-data d2 may be determined to be abnormal sub-data; or, only the sub-data identifier (Gid1, id2) may be determined to be an abnormal identifier. In certain embodiments of the present disclosure, when the sub-data identifier includes an intra-group sequence number identifier, if no consumption increment sub-data is received after a 20-millisecond interval following the receipt of consumption increment sub-data d1, then the consumption increment sub-data d2 that should have been received is considered lost, thereby determining that the corresponding consumption increment sub-data d2 is abnormal sub-data, and the corresponding sub-data identifier id2 is an abnormal identifier. Alternatively, only the consumption increment sub-data d2 may be determined to be abnormal sub-data; or, only the sub-data identifier id2 may be determined to be an abnormal identifier.

In certain embodiments of the present disclosure, if the image forming device transmits consumption increment sub-data in the manner described in the second method, when the sub-data identifier includes a group sequence number identifier and an intra-group sequence number identifier, in the case that the group sequence number identifiers corresponding to multiple sub-data group identifiers are in a non-consecutive state, it is determined that the consumption increment sub-data corresponding to the missing group sequence number identifier relative to the consecutive state is abnormal sub-data, and/or the sub-data identifier corresponding to the missing group sequence number identifier is abnormal identifier.

For example, the information processing device may consecutively receive consumption increment sub-data groups and their corresponding sub-data group identifiers. If it sequentially receives the sub-data group identifiers of the first group and the third group, specifically, the sub-data group identifiers of the first group include (Gid1, id1), (Gid1, id2), and (Gid1, id3), and the corresponding consumption increment sub-data group includes d1, d2, and d3; the sub-data group identifiers of the third group include (Gid3, id1), (Gid3, id2), and (Gid3, id3), and the corresponding consumption increment sub-data group includes d7, d8, and d9, it may be determined that the group sequence number identifiers Gid1 and Gid3 corresponding to the sequentially received sub-data group identifiers are in a non-consecutive state. Then, it is determined that the missing group sequence number identifier relative to the consecutive state is Gid2, that is, the sub-data group identifiers of the second group are missing, including (Gid2, id1), (Gid2, id2), and (Gid2, id3), and the corresponding consumption increment sub-data group includes d4, d5, and d6. Therefore, it may be determined that the consumption increment sub-data d4, d5, and d6 corresponding to the missing group sequence number identifier Gid2 are abnormal sub-data, and the sub-data identifiers (Gid2, id1), (Gid2, id2), and (Gid2, id3) corresponding to the missing group sequence number identifier are abnormal identifiers. Alternatively, only the consumption increment sub-data d4, d5, and d6 may be determined as abnormal sub-data; or, only the sub-data identifiers (Gid2, id1), (Gid2, id2), and (Gid2, id3) may be determined as abnormal identifiers.

In certain embodiments of the present disclosure, if the image forming device transmits consumption increment sub-data in the manner described in the second method, when the sub-data identifier includes a group sequence number identifier and an intra-group sequence number identifier, if the group sequence number identifier of the last received sub-data identifier is different from the last group sequence number identifier included in the print task end instruction transmitted by the image forming device, it is determined that the sub-data identifier corresponding to the missing group sequence number identifier is an abnormal identifier, and/or the consumption increment sub-data corresponding to the missing group sequence number identifier is abnormal sub-data, where the missing group sequence number identifier includes the last group sequence number identifier, or the last group sequence number identifier and the missing group sequence number identifier between the last group sequence number identifier and the group sequence number identifier of the last received sub-data identifier.

In certain embodiments of the present disclosure, if a group of sub-data identifiers includes three sub-data identifiers, and the image forming device transmits three groups of sub-data identifiers and corresponding consumption increment sub-data groups, specifically, the first group of sub-data identifiers includes (Gid1, id1), (Gid1, id2), and (Gid1, id3), and the corresponding first group of consumption increment sub-data pieces includes d1, d2, and d3; the second group of sub-data identifiers includes (Gid2, id1), (Gid2, id2), and (Gid2, id3), and the corresponding second group of consumption increment sub-data pieces includes d4, d5, and d6; the third group of sub-data identifiers includes (Gid3, id1), (Gid3, id2), and (Gid3, id3), and the corresponding third group of consumption increment sub-data pieces includes d7, d8, and d9. For example, if the group sequence number identifier of the last received sub-data identifier is Gid2, and the last group sequence number identifier included in the print task end instruction transmitted by the image forming device is Gid3, then the sub-data identifiers (Gid3, id1), (Gid3, id2), and (Gid3, id3) corresponding to the missing group sequence number identifier Gid3 are determined to be abnormal identifiers, and the consumption increment sub-data d7, d8, and d9 corresponding to the missing group sequence number identifier Gid3 are abnormal sub-data. Alternatively, only the consumption increment sub-data d7, d8, and d9 may be identified as abnormal sub-data; or, only the sub-data identifiers (Gid3, id1), (Gid3, id2), and (Gid3, id3) corresponding to the missing group sequence number identifier Gid3 may be identified as abnormal identifiers. For example, if the last received sub-data identifier has a group sequence number identifier of Gid1, and the last group sequence number identifier included in the print task end instruction transmitted by the image forming device is Gid3, then the missing group sequence number identifiers are determined to be Gid2 and Gid3. Therefore, the sub-data identifiers (Gid2, id1), (Gid2, id2), and (Gid2, id3) corresponding to the group sequence number identifier Gid2 are determined to be abnormal identifiers, and the sub-data identifiers (Gid3, id1), (Gid3, id2), and (Gid3, id3) corresponding to the group sequence number identifier Gid3 are determined to be abnormal identifiers. The consumption increment sub-data d4, d5, and d6 corresponding to the missing group sequence number identifier Gid2 are determined to be abnormal sub-data, and the consumption increment sub-data d7, d8, and d9 corresponding to the missing group sequence number identifier Gid3 are determined to be abnormal sub-data. Alternatively, only the consumption increment sub-data d4, d5, d6, d7, d8, and d9 may be identified as abnormal sub-data; or, only the sub-data identifiers (Gid2, id1), (Gid2, id2), (Gid2, id3), (Gid3, id1), (Gid3, id2), and (Gid3, id3) may be identified as abnormal identifiers.

In certain embodiments of the present disclosure, when a sub-data identifier includes a group sequence number identifier and an intra-group sequence number identifier, the sub-data identifier in the sub-data group identifier that does not meet the preset intra-group sequence number identifier rule is determined as an abnormal identifier.

When the image forming device transmits the consumption increment sub-data and the corresponding sub-data identifier in the manner of method two described above, the abnormal identifier may be determined based on the situation where the intra-group sequence number identifier is lost or the intra-group sequence number identifier is incorrect.

In certain embodiments of the present disclosure, if the preset intra-group sequence number identifier rule specifies that the intra-group sequence number identifiers in a group of sub-data group identifiers includes id1, id2, id3, id4, and id5, and for a group of sub-data group identifiers with group sequence number identifier Gid1, the sub-data group identifiers include (Gid1, id1), (Gid1, id2), (Gid1, id3), (Gid1, id4), and (Gid1, id5), if some intra-group sequence number identifiers are missing, for example, if the received sub-data identifiers are (Gid1, id2), (Gid1, id4), (Gid1, id1), and (Gid1, id5), then it is determined that the missing intra-group sequence number identifier is id3. The intra-group sequence number identifier id3 does not satisfy the preset intra-group sequence number identifier rule, and its corresponding sub-data identifier (Gid1, id3) is determined to not satisfy the preset intra-group sequence number identifier rule, and the sub-data identifier (Gid1, id3) is determined to be an abnormal identifier. Alternatively, if an error occurs in the intra-group sequence number identifier, for example, if the received sub-data identifier is (Gid1, id6), the sub-data identifiers (Gid1, id1), (Gid1, id2), (Gid1, id3), (Gid1, id4), and (Gid1, id5) that do not meet the preset intra-group sequence number identifier rules will be identified as abnormal identifiers. Alternatively, if the received sub-data identifiers are (Gid1, id1), (Gid1, id2), (Gid1, id3), (Gid1, id4), and (Gid1, id6), the sub-data identifier (Gid1, id5) that does not meet the preset intra-group sequence number identifier rules will be identified as an abnormal identifier.

Furthermore, for a group of sub-data group identifiers with group sequence number identifier Gid1, including (Gid1, id1), (Gid1, id2), (Gid1, id3), (Gid1, id4), and (Gid1, id5), the preset intra-group sequence number identifier rule stipulates that the intra-group sequence number identifiers in a group of sub-data group identifiers includes id1, id2, id3, id4, and id5. For example, if the sub-data identifiers received by the information processing device are (Gid1, id2), (Gid1, id4), (Gid1, id1), and (Gid1, id5), then the missing intra-group sequence number identifier is determined to be id3, and the sub-data identifier (Gid1, id3) is determined to be an abnormal identifier. If the consumption increment sub-data corresponding to the sub-data identifier (Gid1, id3) is d3, then the consumption increment sub-data d3 may be determined to be abnormal sub-data.

In certain embodiments of the present disclosure, the sub-data identifier corresponding to the preset identifier that is different from the intra-group sequence number identifier corresponding to the sub-data group identifier in the preset identifier set is determined as an abnormal identifier. The preset identifier set includes a preset number of preset identifiers.

For example, when sub-data identifiers include group sequence number identifiers and intra-group sequence number identifiers, if the preset identifier set is {id1, id2, id3, id4, id5}, which contains 5 preset identifiers, the corresponding intra-group sequence number identifiers are determined to be id1, id2, id3, id4, and id5 based on this preset identifier set. For a group of sub-data identifiers with group sequence number identifier Gid1, if the received sub-data identifiers are (Gid1, id2), (Gid1, id4), (Gid1, id1), and (Gid1, id5), then it is determined that id3 is not in the preset identifier set. The sub-data identifier (Gid1, id3) corresponding to the preset identifier id3, which is different from the intra-group sequence number identifier corresponding to the sub-data group identifier in the preset identifier set, is identified as an abnormal identifier. That is, (Gid1, id3) is an abnormal identifier. It may be understood that if the information processing device receives a sub-data group identifier whose intra-group sequence number identifier is not in the preset identifier set, the corresponding sub-data identifier may be identified as an abnormal identifier.

Furthermore, in the above embodiment, the sub-data identifier (Gid1, id3) is determined as an abnormal identifier. If the consumption increment sub-data corresponding to the sub-data identifier (Gid1, id3) is d3, the consumption increment sub-data d3 may be determined as an abnormal sub-data.

In certain embodiments of the present disclosure, after determining that the indicator consumption increment sub-data is normal sub-data or abnormal sub-data, and/or the sub-data identifier corresponding to the consumption increment sub-data is normal identifier or abnormal identifier, the information processing device determines the cumulative consumption increment data of the consumable material corresponding to the print task based on one or more consumption increment sub-data that are normal sub-data, or determines the cumulative consumption increment data of the consumable material corresponding to the print task based on one or more consumption increment sub-data pieces corresponding to the sub-data identifiers that are normal identifiers. Specifically, the cumulative consumption increment data may be determined by summing the consumption amounts indicated by the aforementioned consumption increment sub-data.

In certain embodiments of the present disclosure, in the process of determining the cumulative consumption increment data by summing, the information processing device may perform summing processing as soon as it receives a consumption increment sub-data that meets the summing conditions, or the information processing device may perform summing processing on all consumption increment sub-data that meet the summing conditions after the print task is completed.

In certain embodiments of the present disclosure, the information processing device may perform summing processing after receiving each group of consumption increment sub-data that meets the summing conditions.

In certain embodiments of the present disclosure, if the information processing device receives consumption correction data, and the summing condition is met, it may determine the corrected cumulative consumption increment data based on the consumption correction data. That is, the above process also belongs to the process of determining the cumulative consumption increment data.

In certain embodiments of the present disclosure, the consumption increment status data may also be determined in other ways. Specifically, the consumption increment status data includes abnormality indication information indicating that the consumption increment sub-data is an abnormal sub-data. The abnormality indication information corresponds to the sub-data identifier of the consumption increment sub-data that has not been added to the cumulative consumption increment data. In other words, the anomaly indication information may be determined based on the sub-data identifier corresponding to the consumption increment sub-data that has not been added to the cumulative consumption increment data. In this scenario, the consumption increment sub-data that is not added to the cumulative consumption increment data may be consumption increment sub-data that the information processing device determines as abnormal sub-data based on one or more of the judgment conditions mentioned above, such as the consumption amount indicated by the consumption increment sub-data, the sub-data identifier, and the receiving time of the consumption information.

Alternatively, the consumption increment sub-data that is not added to the cumulative consumption increment data may also be consumption increment sub-data that, although satisfying one or more of the above-mentioned judgment conditions based on consumption amount indicated by consumption increment sub-data, sub-data identifier, and consumption information receiving time, is not added to the cumulative consumption increment data by the information processing device. For example, under certain communication conditions, communication between the image forming device and the information processing device may be unreliable. In order to improve the reliability of data synchronization, the information processing device may, based on the communication conditions with the image forming device, consider the current communication unreliable, and thus consider the consumption increment sub-data received under the communication conditions to be unreliable, and therefore not add it to the cumulative consumption increment data.

After determining the cumulative consumption increment data and/or consumption increment status data of the consumable materials corresponding to the print task at step S402, the process proceeds to step S403.

At step S403, the cumulative consumption increment data and/or consumption increment status data are transmitted to the image forming device.

In certain embodiments of the present disclosure, the information processing device may transmit cumulative consumption increment data, or consumption increment status data, or both cumulative consumption increment data and consumption increment status data to the image forming device. When the information processing device transmits cumulative consumption increment data to the image forming device, the cumulative consumption increment data may be cumulative consumption increment data corrected based on consumption correction data, or it may be cumulative consumption increment data without correction. For example, if there are no abnormalities during the synchronization of consumption increment data, only the cumulative consumption increment data determined based on all consumption increment sub-data in the consumption increment data needs to be transmitted to the image forming device. Conversely, if there are abnormalities during the synchronization of consumption increment data, the cumulative consumption increment data determined based on the normal consumption increment sub-data in the consumption increment data may be transmitted to the image forming device first, and then the cumulative consumption increment data corrected based on the consumption correction data may be transmitted to the image forming device. It is understandable that the information processing device actively transmits consumption increment status data to the image forming device, which may provide feedback to the image forming device on any abnormalities in the synchronization process of consumption increment data corresponding to the print task. This allows the image forming device to promptly detect abnormalities and take appropriate corrective actions, ensuring the reliability and accuracy of the data corresponding to the print task.

As will be further described below with reference to the accompanying drawings, transmitting cumulative consumption increment data and/or consumption increment status data to the image forming device will further enable the image forming device to generate consumable status information, so as to facilitate the image processing apparatus to determine that the consumables corresponding to the information processing device or the information processing device do not meet expectations, and to facilitate the information processing device to correct the synchronization data. Consumable status information includes one or more of normal information, abnormal information, or consumption correction data. Normal information indicates that the information processing device or the consumable corresponding to the information processing device is in accordance with expectations. Abnormal information indicates that the information processing device or the consumable corresponding to the information processing device is not in accordance with expectations. Consumption correction data is determined based on consumption increment sub-data as abnormal sub-data and/or based on consumption increment sub-data corresponding to sub-data identifier as abnormal identifier. The specific form of the sub-data identifier may be numbers, letters, or other forms of identifiers, as long as they may identify the corresponding consumption increment sub-data. The present disclosure does not impose any particular restrictions.

In certain embodiments of the present disclosure, after the information processing device determines the cumulative consumption increment data and/or consumption increment status data, it may directly feed back the cumulative consumption increment data and/or consumption increment status data to the image forming device; or it may feed back the cumulative consumption increment data and/or consumption increment status data to the image forming device in response to the instruction of the image forming device.

In certain embodiments of the present disclosure, the information processing device determines the number of abnormal data based on the consumption increment status data and transmits the number of abnormal data to the image forming device. The number of abnormal data is determined based on abnormal identifiers and/or abnormal sub-data. Specifically, once the information processing device determines consumption increment status data, it may calculate the corresponding number of pieces of abnormal data. For example, the number of pieces of abnormal data may be obtained by counting the number of sub-data identifiers that serve as abnormal identifiers. This number of pieces of abnormal data may represent the number of abnormal identifiers. Alternatively, the number of pieces of abnormal data may be obtained by counting the number of pieces of consumption increment sub-data that are abnormal sub-data; this number of pieces of abnormal data may represent the number of pieces of abnormal sub-data. In certain embodiments, the number of abnormal identifiers or the number of abnormal sub-data may be arbitrarily selected as the number of pieces of abnormal data.

The number of pieces of abnormal data is used by the image forming device to determine whether the proportion of abnormal data is greater than a predetermined threshold. Specifically, after the information processing device transmits the number of pieces of abnormal data to the image forming device, the image forming device may determine the proportion of abnormal data. The proportion of abnormal data may be determined based on the number of pieces of abnormal data and the total amount of pieces of consumption increment sub-data transmitted by the image forming device during the entire print task, or based on the number of pieces of abnormal data and the total amount of sub-data identifiers transmitted by the image forming device during the entire print task. Then, the image forming device may determine whether the proportion of abnormal data exceeds a predetermined threshold, and further determine whether the information processing device or the consumables corresponding to the information processing device meet expectations.

In certain embodiments of the present disclosure, after determining the number of pieces of abnormal data based on the number of abnormal identifiers, the information processing device may transmit the number of pieces of abnormal data and the sub-data identifier corresponding to the abnormal identifier together to the image forming device, or it may transmit the number of pieces of abnormal data and the sub-data identifier corresponding to the abnormal identifier to the image forming device separately.

In certain embodiments of the present disclosure, the communication method applied to an information processing device further includes acquiring consumption correction data; and generating corrected cumulative consumption increment data based on the consumption correction data and cumulative consumption increment data. Specifically, the consumption correction data may be determined based on consumption increment sub-data that serves as abnormal sub-data, and/or based on consumption increment sub-data corresponding to a sub-data identifier that serves as abnormality identifier. It is understandable that the consumption correction data may be determined based on the consumption increment status data. When there are abnormalities during the synchronization of consumption increment data, the consumption correction data is mainly determined based on the consumption increment sub-data that represents the abnormalities in the consumption increment status data. The consumption correction data may correct the cumulative consumption increment data.

Specifically, in certain embodiments of the present disclosure, the consumption correction data may be the correction data corresponding to the consumption increment sub-data as abnormal sub-data, and/or the correction data corresponding to the consumption increment sub-data as sub-data identifier of an abnormal identifier, that is, the consumption correction data is at least one correction data corresponding to the consumption increment sub-data. For example, taking the consumption correction data as the correction data for the consumption increment sub-data corresponding to the sub-data identifier used as an abnormal identifier, when the information processing device feeds back the sub-data identifier used as an abnormal identifier to the image forming device, the image forming device may feed back the corresponding consumption increment sub-data correction data to the information processing device based on the aforementioned sub-data identifier, that is, feed back consumption correction data. It may be understood that the consumption correction data fed back to the information processing device may be one or more pieces.

In certain embodiments of the present disclosure, the consumption correction data may be obtained by summing the correction data corresponding to the consumption increment sub-data that is abnormal sub-data, or by summing the correction data of the consumption increment sub-data corresponding to the sub-data identifier that is an abnormal identifier. That is, the consumption correction data is the sum correction data corresponding to all consumption increment sub-data that indicate an abnormality, and the correction data of the aforementioned consumption increment sub-data is the consumption amount corresponding to the consumption increment sub-data. For example, if the consumption correction data is obtained by summing the correction data of the consumption increment sub-data corresponding to the sub-data identifier which serves as the abnormal identifier, when the information processing device feeds back the sub-data identifier which serves as the abnormal identifier to the image forming device, the image forming device may determine the correction data of the corresponding consumption increment sub-data based on the aforementioned sub-data identifier, sum all the correction data to obtain the consumption correction data, and then feed back the consumption correction data to the information processing device.

In certain embodiments of the present disclosure, the consumption increment status data transmitted by the information processing device to the image forming device may include consumption increment sub-data as abnormal sub-data and its sub-data identifier. In certain embodiments of the present disclosure, the consumption increment status data transmitted by the information processing device to the image forming device may simply be a sub-data identifier of the abnormal identifier. This abnormal identifier may indicate the corresponding consumption increment sub-data. By transmitting only the abnormal identifier, the amount of data transmitted may be effectively reduced, which is beneficial for improving communication efficiency. Based on this, the image forming device may obtain the corresponding consumption correction data so that the information processing device may correct the cumulative consumption increment data.

In certain embodiments of the present disclosure, the consumption increment status data transmitted by the information processing device to the image forming device may include consumption increment sub-data as normal sub-data and its sub-data identifier. Based on this, the image forming device may determine consumption increment sub-data as abnormal sub-data and its sub-data identifier according to the aforementioned consumption increment sub-data. In certain embodiments of the present disclosure, the consumption increment status data transmitted by the information processing device to the image forming device may simply be a sub-data identifier serving as a normal identifier. Based on this, the image forming device may determine the sub-data identifier serving as an abnormal identifier according to the aforementioned sub-data identifier. Furthermore, the image forming device may obtain corresponding consumption correction data so that the information processing device may correct the cumulative consumption increment data.

Understandably, the information processing device may proactively analyze abnormalities in data synchronization during the print process and feed back the consumption increment status data to the image forming device. This may improve the accuracy of consumable materials consumption information and help ensure the normal operation of subsequent image forming jobs. Since the image forming device cannot determine the possible abnormalities in data synchronization after transmitting data, analyzing the abnormalities based on the data received by the information processing device may more accurately identify problems such as data loss and errors that occur during the synchronization process, thereby improving the reliability and accuracy of data synchronization.

Furthermore, in certain embodiments of the present disclosure, the consumption correction data is generated by the image forming device based on the consumption increment status data transmitted by the information processing device and then transmitted to the information processing device. Alternatively, the consumption correction data may also be determined by the information processing device based on previously stored or cached data.

In certain embodiments of the present disclosure, the information processing device does not verify the received data during the print process, but corrects the data after the print task is completed to ensure the accuracy of the synchronized data of the information processing device. Unlike the method of receiving and verifying data during the print process, certain embodiments of the present disclosure may greatly reduce the amount of data that needs to be verified, and may reduce communication overhead to a certain extent.

The communication method applied to an information processing device according to certain embodiments of the present disclosure has been described above with reference to FIG. 4. According to the communication method applied to an information processing device according to certain embodiments of the present disclosure, by the information processing device determining and feeding back to the image forming device the cumulative consumption increment data and/or consumption increment status data of the consumable material corresponding to the print task based on the consumption increment data, the consumption information of the consumable material between the image forming device and the information processing device is synchronized in a timely and reliable manner. This allows the image forming device to determine whether the information processing device or the corresponding consumable material meets expectations, facilitates the user's understanding of the status information of the consumable material, and helps improve the stability of the print operation.

FIG. 5 is a flowchart further illustrating a communication method applied to an information processing device according to certain embodiments of the present disclosure. Specifically, the communication method includes the following steps:

At step S501, a print task completion instruction is received.

In certain embodiments of the present disclosure, the print task completion instruction is used to instruct the image forming device to complete the print task. When the information processing device receives the print task completion instruction, it may determine that the corresponding print task has been completed, facilitating subsequent processing operations.

At step S502, based on the print task completion instruction, the consumption increment status data of the consumable material corresponding to the print task is obtained.

In certain embodiments of the present disclosure, in response to a print task completion instruction, the information processing device may acquire consumption increment status data of consumable materials corresponding to the print task. The consumption increment status data is determined based on the consumption increment data and is used to indicate whether the consumption increment data is normal or abnormal, and/or whether the identifier corresponding to the consumption increment data is a normal identifier or an abnormal identifier. The consumption increment data is used to indicate the consumption information of consumable materials corresponding to the print task performed by the image forming device. The consumption information may be one or more of the following: number of pages printed, print time, developer consumption (for example, toner weight in grams; or toner dots in thousands of dots), and the rotation distance of the photosensitive drum.

It should be noted that after a print task is completed, the information processing device may acquire the consumption increment status data, promptly detect any abnormalities in data synchronization during the print task, and proactively transmit the consumption increment status data to the image forming device. This allows the image forming device to report any abnormalities in the consumption increment data synchronization process corresponding to the print task, enabling the image forming device to promptly identify the problems and take appropriate corrective actions to ensure the reliability and accuracy of the data corresponding to the print task.

In certain embodiments of the present disclosure, the information processing device may first acquire consumption increment data and, based on the consumption increment data, determine the consumption increment status data of the consumable materials corresponding to the print task.

In certain embodiments of the present disclosure, when a print task includes a print job, the completion of the print job indicates that the print task is complete, thereby generating a corresponding print task end instruction.

In certain embodiments of the present disclosure, acquiring data from the consumption increment data may mean that the information processing device determines data from itself based on a particular acquisition method, or it may mean that the information processing device acquires data from the image forming device.

In certain embodiments of the present disclosure, the information processing device may first acquire associated data of the consumption increment data, and then convert the associated data of the consumption increment data to obtain the consumption increment data.

In the communication process between the information processing device and the image forming device, if the information processing device obtains consumption increment data from the image forming device, in certain embodiments of the present disclosure, the information processing device may directly read and parse the instructions received in real time from the image forming device to obtain the consumption increment data. In certain embodiments of the present disclosure, the information processing device may further cache instructions received in real time from the image forming device, and then parse the cached instructions to obtain consumption increment data. In certain embodiments of the present disclosure, the information processing device may further determine consumption increment data based on business data under a particular business scenario, which may be obtained from the image forming device.

Taking the acquisition of consumption increment data from the image forming device by the information processing device as an example, in certain embodiments of the present disclosure, the information processing device is, for example, the consumable chip 210 described with reference to FIG. 1 and FIG. 2A, or the consumable chips 210 and 220 described with reference to FIG. 2B, and the image forming device is, for example, the image forming device 100 described with reference to FIG. 1 to FIG. 2B. In certain embodiments of the present disclosure, referring to the structure shown in FIG. 2A, acquiring consumption increment data from the image forming device may, for example, mean that consumable chip 210 receives consumption increment data from the image forming device 100 electrically connected thereto via a communication interface. In certain embodiments of the present disclosure, referring to the structure shown in FIG. 2B, acquiring consumption increment data from the image forming device may, for example, mean that second consumable chip 220 receives consumption increment data from the image forming device 100 via first consumable chip 210. In this scenario, the first consumable chip 210 may be a consumable chip that provides basic functions (for example, communication functions), while the second consumable chip 220 may be a consumable chip that performs a communication method according to certain embodiments of the present disclosure.

In certain embodiments of the present disclosure, the consumption increment data includes at least one piece of consumption increment sub-data; or the consumption increment data includes at least one group of consumption increment sub-data, where a group of consumption increment sub-data includes a predetermined number of pieces of consumption increment sub-data.

In certain embodiments of the present disclosure, the consumption increment data includes at least one piece of consumption increment sub-data and a corresponding sub-data identifier; or the consumption increment data includes at least one group of consumption increment sub-data and a corresponding sub-data group identifier, where a group of consumption increment sub-data includes a predetermined number of pieces of consumption increment sub-data, the sub-data group identifier includes a predetermined number of sub-data identifiers, the sub-data identifier includes an intra-group sequence number identifier, or the sub-data identifier includes a group sequence number identifier and an intra-group sequence number identifier. In certain embodiments, the information processing device may acquire at least one piece of consumption increment sub-data and its corresponding sub-data identifier; or it may acquire at least one group of consumption increment sub-data and their corresponding sub-data group identifiers. Specifically, the information processing device may sequentially acquire each piece of consumption increment sub-data and its corresponding sub-data identifier in the consumption increment sub-data group.

Reference may be made to certain embodiments of FIG. 4 for a method of acquiring the consumption increment data, and corresponding description is not reproduced here for brevity.

In certain embodiments of the present disclosure, during the process of synchronizing information of consumable material between the image forming device and the information processing device, the image forming device may transmit consumption increment sub-data to the information processing device in different ways, including transmitting method one: transmitting consumption increment sub-data one by one, and transmitting method two: transmitting consumption increment sub-data in groups. For particular embodiments of the transmitting methods, references may be made to the description of the two transmitting methods in FIG. 4 above, and their repeated description will be omitted here.

It should be noted that the step of determining the consumption increment status data of consumable materials corresponding to a print task based on the consumption increment data, as described above, may be performed either before or after receiving the print task completion instruction. Once the information processing device receives the print task completion instruction, it may acquire all the consumption increment status data corresponding to that print task.

Regarding the method by which the information processing device determines the consumption increment status data, in certain embodiments of the present disclosure, when the image forming device transmits the consumption increment sub-data in the manner described in method 1 or method 2, the information processing device determines the consumption increment status data based on one or more of the consumption amount indicated by the consumption increment sub-data, the sub-data identifier, and the receiving time of the consumption increment data. The consumption increment status data is used to indicate whether the consumption increment sub-data is normal sub-data or abnormal sub-data, and/or whether the sub-data identifier corresponding to the consumption increment sub-data is a normal identifier or an abnormal identifier.

Reference may be made to certain embodiments of FIG. 4 for a method of determining the consumption increment status data, and corresponding description is not reproduced here for brevity.

In certain embodiments of the present disclosure, the information processing device determines the cumulative consumption increment data of consumable materials corresponding to a print task based on the consumption increment data. Specifically, after determining, as above, whether the indicator of consumption increment sub-data is normal sub-data or abnormal sub-data, and/or the sub-data identifier corresponding to the consumption increment sub-data is a normal identifier or an abnormal identifier, the information processing device determines the cumulative consumption increment data of consumable materials corresponding to a print task based on one or more pieces of consumption increment sub-data that are normal sub-data, or determines the cumulative consumption increment data of consumable materials corresponding to a print task based on one or more pieces of consumption increment sub-data corresponding to the sub-data identifier that is a normal identifier. Specifically, the cumulative consumption increment data may be determined by summing the consumption amounts indicated by the aforementioned consumption increment sub-data.

In certain embodiments of the present disclosure, in the process of determining the cumulative consumption increment data by summing, the information processing device may perform summing processing as soon as it receives a piece of consumption increment sub-data that meets the summing conditions, or the information processing device may perform summing processing on all consumption increment sub-data that meet the summing conditions after the print task is completed.

In certain embodiments of the present disclosure, the information processing device may perform summing processing after receiving each group of consumption increment sub-data that meets the summing conditions.

In certain embodiments of the present disclosure, the consumption increment status data may also be determined in other ways. Specifically, the consumption increment status data includes abnormality indication information indicating that the consumption increment sub-data is abnormal sub-data. The abnormality indication information corresponds to the sub-data identifier of the consumption increment sub-data that has not been added to the cumulative consumption increment data. In other words, the abnormality indication information may be determined based on the sub-data identifier corresponding to the consumption increment sub-data that has not been added to the cumulative consumption increment data. In this scenario, the consumption increment sub-data that is not added to the cumulative consumption increment data may be consumption increment sub-data that the information processing device determines as abnormal sub-data based on one or more of the judgment conditions mentioned above, such as the consumption amount indicated by the consumption increment sub-data, the sub-data identifier, and the receiving time of the consumption information.

Alternatively, the consumption increment sub-data that is not added to the cumulative consumption increment data may also be consumption increment sub-data that, although satisfying one or more of the above-mentioned judgment conditions based on consumption amount indicated by consumption increment sub-data, sub-data identifier, and consumption information receiving, is not added to the cumulative consumption increment data by the information processing device. For example, under certain communication conditions, communication between the image forming device and the information processing device may be unreliable. To improve the reliability of data synchronization, the information processing device may, based on the communication conditions with the image forming device, consider the current communication unreliable. Therefore, if it deems the received consumption increment sub-data under these conditions unreliable, it may not add it to the cumulative consumption increment data.

At step S503, the consumption increment status data is transmitted to the image forming device.

In certain embodiments of the present disclosure, after the information processing device obtains the consumption increment status data of the consumable material corresponding to the print task, it may transmit the consumption increment status data to the image forming device.

In certain embodiments of the present disclosure, after the information processing device determines the cumulative consumption increment data of the consumable material corresponding to the print task, it transmits the cumulative consumption increment data to the image forming device.

In certain embodiments of the present disclosure, the information processing device transmits cumulative consumption increment data and/or consumption increment status data to the image forming device, which will further generate consumable status information by the image forming device. This facilitates the image processing apparatus in determining that the information processing device or the consumable corresponding to the information processing device does not meet expectations, and also facilitates the information processing device in correcting the synchronization data. Consumable status information includes one or more of normal information, abnormal information, or consumption correction data. Normal information indicates that the information processing device or the consumable corresponding to the information processing device is in accordance with expectations. Abnormal information indicates that the information processing device or the consumable corresponding to the information processing device is not in accordance with expectations. Consumption correction data is determined based on consumption increment sub-data as abnormal sub-data and/or based on consumption increment sub-data corresponding to sub-data identifier as abnormal identifier.

In certain embodiments of the present disclosure, after the information processing device determines the cumulative consumption increment data and/or consumption increment status data, it may directly feed back the cumulative consumption increment data and/or consumption increment status data to the image forming device; or it may feed back the cumulative consumption increment data and/or consumption increment status data to the image forming device in response to the instruction of the image forming device.

In certain embodiments of the present disclosure, the information processing device determines the number of pieces of abnormal data based on the consumption increment status data and transmits the number of pieces of abnormal data to the image forming device. The number of pieces of abnormal data is determined based on abnormal identifiers and/or abnormal sub-data. Specifically, once the information processing device determines consumption increment status data, it may calculate the corresponding number of pieces of abnormal data. For example, the number of pieces of abnormal data may be obtained by counting the number of sub-data identifiers that serve as abnormal identifiers. This number of pieces of abnormal data may represent the number of abnormal identifiers. Alternatively, the number of pieces of abnormal data may be obtained by counting the number of pieces of consumption increment sub-data that are abnormal sub-data; this number of pieces of abnormal data may represent the number of pieces of abnormal sub-data. In certain embodiments, the number of abnormal identifiers or the number of abnormal sub-data may be arbitrarily selected as the number of pieces of abnormal data.

The number of pieces of abnormal data is used by the image forming device to determine whether the proportion of abnormal data exceeds a predetermined threshold. Specifically, after the information processing device transmits the number of pieces of abnormal data to the image forming device, the image forming device may determine the proportion of abnormal data. This proportion of abnormal data may be determined based on the number of pieces of abnormal data and the total amount of consumption increment sub-data transmitted by the image forming device during the entire print task, or based on the number of pieces of abnormal data and the total amount of sub-data identifiers transmitted by the image forming device during the entire print task. Then, the image forming device may determine whether the proportion of abnormal data is greater than a predetermined threshold, and then determine whether the information processing device or the consumables corresponding to the information processing device meet expectations.

In certain embodiments of the present disclosure, the communication method applied to an information processing device further includes acquiring consumption correction data; and generating corrected cumulative consumption increment data based on the consumption correction data and cumulative consumption increment data. Specifically, the consumption correction data may be determined based on consumption increment sub-data that serves as abnormal sub-data, and/or based on consumption increment sub-data corresponding to a sub-data identifier that serves as abnormal identifier.

Specifically, in certain embodiments of the present disclosure, the consumption correction data may be the correction data corresponding to the consumption increment sub-data as abnormal sub-data, and/or the correction data corresponding to the consumption increment sub-data as a sub-data identifier of an abnormal identifier, that is, the consumption correction data is at least one correction data corresponding to the consumption increment sub-data. For example, taking the consumption correction data as the correction data for the consumption increment sub-data corresponding to the sub-data identifier used as an abnormal identifier, when the information processing device feeds back the sub-data identifier used as an abnormal identifier to the image forming device, the image forming device may feed back the corresponding consumption increment sub-data correction data to the information processing device based on the aforementioned sub-data identifier, that is, feed back consumption correction data. It may be understood that the consumption correction data fed back to the information processing device may be one or more pieces.

In certain embodiments of the present disclosure, the consumption correction data may be obtained by summing the correction data corresponding to the consumption increment sub-data that is abnormal sub-data, or by summing the correction data of the consumption increment sub-data corresponding to the sub-data identifier that is abnormal identifier. That is, the consumption correction data is the sum correction data corresponding to all consumption increment sub-data that indicate an abnormality, and the correction data of the aforementioned consumption increment sub-data is the consumption amount corresponding to the consumption increment sub-data. For example, if the consumption correction data is obtained by summing the correction data of the consumption increment sub-data corresponding to the sub-data identifier which serves as the abnormal identifier, when the information processing device feeds back the sub-data identifier which serves as the abnormal identifier to the image forming device, the image forming device may determine the correction data of the corresponding consumption increment sub-data based on the aforementioned sub-data identifier, summing all the correction data to obtain the consumption correction data, and then feed back the consumption correction data to the information processing device.

In certain embodiments of the present disclosure, the consumption increment status data transmitted by the information processing device to the image forming device may include consumption increment sub-data as abnormal sub-data and its sub-data identifier. In certain embodiments of the present disclosure, the consumption increment status data transmitted by the information processing device to the image forming device may simply be a sub-data identifier as an abnormal identifier. Based on this, the image forming device may obtain corresponding consumption correction data so that the information processing device may correct the cumulative consumption increment data.

In certain embodiments of the present disclosure, the consumption increment status data transmitted by the information processing device to the image forming device may include consumption increment sub-data as normal sub-data and its sub-data identifier. Based on this, the image forming device may determine which consumption increment sub-data as abnormal sub-data and its sub-data identifier according to the aforementioned consumption increment sub-data as normal sub-data. In certain embodiments of the present disclosure, the consumption increment status data transmitted by the information processing device to the image forming device may simply be a sub-data identifier serving as a normal identifier. Based on this, the image forming device may determine which sub-data identifier serving as an abnormal identifier according to the aforementioned sub-data identifier as normal sub-data identifier. Furthermore, the image forming device may obtain corresponding consumption correction data so that the information processing device may correct the cumulative consumption increment data.

In certain embodiments of the present disclosure, the information processing device does not verify the received data during the print process, but corrects the data after the print task is completed to ensure the accuracy of the synchronized data of the information processing device. Unlike the method of receiving and verifying data during the print process, certain embodiments of the present disclosure may greatly reduce the amount of data that needs to be verified, and may reduce communication overhead to a certain extent.

The communication method applied to an information processing device according to certain embodiments of the present disclosure has been described above with reference to FIG. 5. According to the communication method applied to an information processing device according to certain embodiments of the present disclosure, based on a print task completion instruction, the consumption increment status data of the consumable material corresponding to the print task is obtained. It may determine whether the consumption increment status data is normal, enabling the image forming device to judge whether the information processing device or the corresponding consumable material meets expectations. This facilitates the user's understanding of the consumable material status information. Furthermore, it may achieve timely and reliable synchronization of consumable material consumption information between the image forming device and the information processing device, which is beneficial to improving the stability of the print operation.

It should be understood that for relevant embodiments and beneficial effects of the communication method applied to an information processing device according to certain embodiments of the present disclosure described in FIG. 5, reference may be made to FIG. 4 for certain embodiments and beneficial effects of the communication method applied to an information processing device according to certain embodiments of the present disclosure.

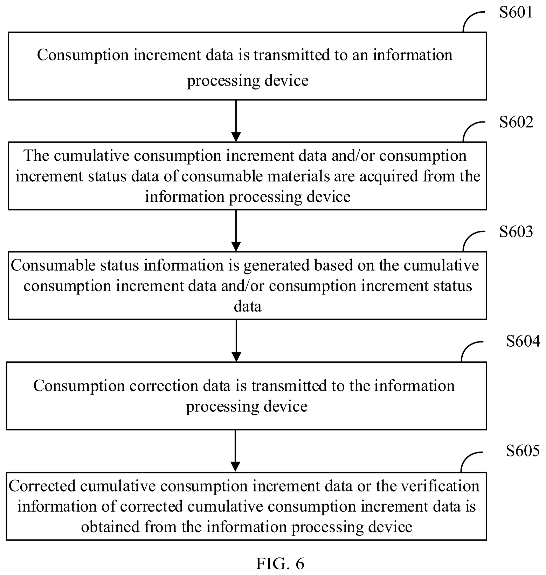

FIG. 6 is a flowchart illustrating a communication method applied to an image forming device according to certain embodiments of the present disclosure. Specifically, the communication method includes the following steps:

At step S601, consumption increment data is transmitted to an information processing device.

In certain embodiments of the present disclosure, the consumption increment data is used to indicate the consumption information of consumable materials corresponding to the image forming device performing a print task. The consumption information may be one or more of the following: number of pages printed, print time, developer consumption (for example, toner weight in grams; or toner dots in thousands), and the rotation distance of the photosensitive drum.

It should be understood that a print task according to certain embodiments of the present disclosure may include one or more print jobs. For example, when a print task includes multiple print jobs, the image forming device may shut down the print engine after all print jobs are completed, or trigger the start and stop of the print engine once each print job is completed.

In certain embodiments of the present disclosure, the consumption increment data includes at least one piece of consumption increment sub-data; or the consumption increment data includes at least one group of consumption increment sub-data, where a group of consumption increment sub-data includes a predetermined number of pieces of consumption increment sub-data.

In certain embodiments of the present disclosure, the consumption increment data includes at least one piece of consumption increment sub-data and a corresponding sub-data identifier; or the consumption increment data includes at least one group of consumption increment sub-data and a corresponding sub-data group identifier, where a group of consumption increment sub-data includes a predetermined number of pieces of consumption increment sub-data, the sub-data group identifier includes a predetermined number of sub-data identifiers, the sub-data identifier includes an intra-group sequence number identifier, or the sub-data identifier includes a group sequence number identifier and an intra-group sequence number identifier. In certain embodiments, the image forming device may transmit at least one piece of consumption increment sub-data and a corresponding sub-data identifier; or it may transmit at least one group of consumption increment sub-data and a corresponding sub-data group identifier. Specifically, the image forming device may transmit each piece of consumption increment sub-data and its corresponding sub-data identifier in the consumption increment sub-data group in sequence.

In certain embodiments of the present disclosure, the consumption increment sub-data may be used to indicate one or more of the following: consumption information corresponding to a predetermined number of print pages (for example, 10 pages), consumption information corresponding to a predetermined print time (for example, 60 seconds), consumption information corresponding to a predetermined amount of developer (for example, toner weight in grams; or toner dots in thousands of dots), and consumption information corresponding to a predetermined photosensitive drum rotation distance (for example, 4000 mm).

It should be noted that there are several different ways to transmit consumption increment data, which will be discussed in more detail below.

In certain embodiments of the present disclosure, when the consumption increment data includes at least one piece of consumption increment sub-data and a corresponding sub-data identifier, the image forming device may transmit the consumption increment sub-data and the sub-data identifier to the information processing device; or, when the consumption increment data includes at least one group of consumption increment sub-data and a corresponding sub-data group identifier, the image forming device may transmit the group of consumption increment sub-data and the corresponding sub-data group identifier, that is, the information processing device receives a predetermined number of pieces of consumption increment sub-data and a predetermined number of sub-data identifiers.

In certain embodiments of the present disclosure, when the consumption increment data includes at least one piece of consumption increment sub-data, the image forming device may transmit the consumption increment sub-data to the information processing device. The information processing device may receive the consumption increment sub-data and count the acquired at least one consumption increment sub-data, and determine the sub-data identifier corresponding to the at least one consumption increment sub-data based on the counting result. Alternatively, the information processing device may also time the acquired at least one consumption increment sub-data and determine the sub-data identifier corresponding to the at least one consumption increment sub-data based on the timing result.

In certain embodiments of the present disclosure, when the consumption increment data includes at least one group of consumption increment sub-data, the image forming device may transmit the consumption increment sub-data group to the information processing device. The information processing device may receive the consumption increment sub-data group and count the consumption increment sub-data in the at least one group of consumption increment sub-data, and determine the sub-data set identifier corresponding to the at least one group of consumption increment sub-data based on the counting results. Alternatively, the information processing device may also time the consumption increment sub-data in the at least one group of consumption increment sub-data, and determine the sub-data group identifier corresponding to the at least one group of consumption increment sub-data based on the timing results.

In practical implementations, image forming devices may employ multiple different statistical methods to obtain varying consumption increment data for the same consumable to meet the business needs of different scenarios. For example, if the consumable is toner, in scenario 1, the image forming device calculates toner consumption increment data 1; in scenario 2, it calculates toner consumption increment data 2. Both data are then transmitted to a processing cartridge, which may include an information processing device. The information processing device may directly use consumption increment data 2 for business processing in scenario 2, or it may determine consumption increment data 2 based on consumption increment data 1 (consumption increment data 1 being one implementation of associated data with consumption increment data 2), and then use consumption increment data 2 for business processing in scenario 2.

In certain embodiments of the present disclosure, the consumption increment sub-data transmitted by the image forming device may be determined based on the consumption information of consumable materials corresponding to a preset task quantity in the print task. As mentioned above, the preset task quantity may be, for example, one or more of the following: a predetermined number of pages to print (for example, 10 pages), a predetermined print time (for example, 60 seconds), a predetermined developer consumption (for example, toner weight in grams; or toner dots in thousands of dots), and a predetermined photosensitive drum rotation distance. That is, the consumption increment sub-data may at least indicate the amount of consumable material consumed. The consumption increment sub-data includes the consumption increment sub-data of the consumable materials in the print task that is equal to or less than the preset task quantity. Specifically, if the preset task quantity is a predetermined number of pages to print (for example, 10 pages), the consumption increment sub-data may be the consumption amount of consumable materials corresponding to 10 pages, or the consumption amount of consumable materials corresponding to less than 10 pages.

In certain embodiments of the present disclosure, during the process of synchronizing consumption information of consumable material between the image forming device and the information processing device, the image forming device may transmit consumption increment sub-data to the information processing device in different ways, including transmitting method one: transmitting consumption increment sub-data one by one, and transmitting method two: transmitting consumption increment sub-data in groups. For particular embodiments of the transmitting methods, reference may be made to the description of the two transmitting methods in FIG. 4 above, and their repeated description will be omitted here.

At step S602, the cumulative consumption increment data and/or consumption increment status data of consumable materials are acquired from the information processing device. The cumulative consumption increment data and/or consumption increment status data of consumable materials are determined by the information processing device based on the consumption increment data.

The process of generating cumulative consumption increment data and/or consumption increment status data of consumable materials by the information processing device has been described above with reference to FIGs. 4 and 5, and its repeated description will be omitted here.

At step S603, consumable status information is generated based on the cumulative consumption increment data and/or consumption increment status data.

In certain embodiments of the present disclosure, the consumable status information includes one or more of normal information, abnormal information, or consumption correction data. Specifically, normal information indicates that the information processing device or the consumable corresponding to the information processing device meets expectations; abnormal information indicates that the information processing device or the consumable corresponding to the information processing device does not expectations; and consumption correction data is determined based on consumption increment sub-data as abnormal sub-data, and/or based on consumption increment sub-data corresponding to a sub-data identifier as an abnormal identifier.

In certain embodiments of the present disclosure, the consumption correction data may be the correction data corresponding to the consumption increment sub-data that is abnormal sub-data, and/or the correction data corresponding to the consumption increment sub-data corresponding to a sub-data identifier that is an abnormal identifier, that is, the consumption correction data is at least one correction data corresponding to the consumption increment sub-data. For example, taking the consumption correction data as the correction data for the consumption increment sub-data corresponding to the sub-data identifier as an abnormal identifier, when the information processing device feeds back the sub-data identifier as an abnormal identifier to the image forming device, the image forming device may feed back the corresponding consumption increment sub-data correction data to the information processing device based on the aforementioned sub-data identifier, that is, feed back consumption correction data. It may be understood that the consumption correction data fed back to the information processing device may be one or more pieces.

In certain embodiments of the present disclosure, the consumption correction data may be obtained by summing the correction data corresponding to the consumption increment sub-data that is abnormal sub-data, or by summing the correction data of the consumption increment sub-data corresponding to the sub-data identifier that is an abnormal identifier. That is, the consumption correction data is the cumulative correction data corresponding to all consumption increment sub-data that indicate an abnormality, and the correction data of the aforementioned consumption increment sub-data is the consumption amount corresponding to the consumption increment sub-data. For example, if the consumption correction data is obtained by summing the correction data of the consumption increment sub-data corresponding to the sub-data identifier which serves as the abnormal identifier, when the information processing device feeds back the sub-data identifier which serves as the abnormal identifier to the image forming device, the image forming device may determine the correction data of the corresponding consumption increment sub-data based on the aforementioned sub-data identifier, sum all the correction data to obtain the consumption correction data, and then feed back the consumption correction data to the information processing device.

In certain embodiments of the present disclosure, if the proportion of abnormal data is determined to be greater than a predetermined threshold based on the consumption increment status data, abnormality information is generated, where the proportion of abnormal data is determined based on the number of pieces of abnormal sub-data and/or abnormal identifiers. For example, the image forming device determines whether the total amount of consumption increment sub-data provided by the information processing device as abnormal sub-data is greater than a predetermined threshold (for example, 30%) of the total amount of consumption increment sub-data transmitted during the entire print task. Alternatively, the image forming device determines whether the total number of abnormal identifiers provided by the information processing device exceeds a predetermined threshold (for example, 30%) of the total number of sub-data identifiers transmitted during the entire print task. If the total number of pieces of consumption increment sub-data that is abnormal sub-data or the total number of abnormal identifiers exceeds this threshold, it is determined that there is an abnormality in the communication link or an abnormality in the information processing device, for example, it is determined that the information processing device or the consumables corresponding to the information processing device do not meet expectations, thereby generating an abnormality message. In certain embodiments of the present disclosure, the number of pieces of abnormal sub-data or abnormal identifiers may be directly fed back by the information processing device or calculated by the image forming device. For example, the information processing device may count the total amount of consumption increment sub-data (for example, the number of pieces of abnormal sub-data) that serves as abnormal sub-data and feed it back to the image forming device. It may also count the total amount of abnormal identifiers (for example, the number of abnormal identifiers) and feed it back to the image forming device. Based on this, the image forming device may quickly determine the proportion of abnormal data. Alternatively, after receiving consumption increment sub-data that is abnormal sub-data and/or sub-data identifiers that are abnormal identifiers from the information processing device, the image forming device may count the number of pieces of abnormal sub-data and/or the number of abnormal identifiers.

Furthermore, if the proportion of abnormal data is determined to be no greater than a predetermined threshold based on the consumption increment status data, the cumulative consumption increment data and local consumption increment sub-data are used to determine whether the cumulative consumption increment data is erroneous. In this scenario, the local consumption increment sub-data corresponds to the consumption increment sub-data that is abnormal sub-data and/or the consumption increment sub-data that corresponds to the sub-data identifier that is an abnormal identifier. It may be understood that the local consumption increment sub-data is normal sub-data stored locally by the image forming device.

Specifically, the local consumption increment sub-data and the received cumulative consumption increment data are added together, and the result is compared with the local correct cumulative consumption increment data. If the two are different or the difference exceeds a predetermined range (for example, 5%), indicating that the cumulative consumption increment data is incorrect based on the cumulative consumption increment data and the local consumption increment sub-data, then it is determined that there is an abnormality in the communication link or an abnormality in the information processing device, for example, the information processing device or the consumables corresponding to the information processing device do not meet expectations. For example, when the image forming device receives a sub-data identifier transmitted by the information processing device as an abnormality identifier, it may determine the corresponding local consumption increment sub-data stored locally, then add these local consumption increment sub-data and the received cumulative consumption increment data, and compare them with the local cumulative value of the correct consumption increment data, thereby determining whether the information processing device or the consumables corresponding to the information processing device meet expectations.

Conversely, if the two are the same or the difference between them is within a predetermined range (for example, 5%), that is, when the cumulative consumption increment data and the local consumption increment sub-data indicate that the cumulative consumption increment data is correct, then it is determined that the information processing device or the consumables corresponding to the information processing device meet expectations. Furthermore, the local consumption increment sub-data corresponding to the consumption increment sub-data that is the abnormal sub-data and/or the sub-data identifier that is the abnormal identifier is used as consumption correction data. Alternatively, the local consumption increment sub-data corresponding to the consumption increment sub-data that is the abnormal sub-data and/or the sub-data identifier that is the abnormal identifier is summed, and the sum data is then used as consumption correction data.

In certain embodiments of the present disclosure, the method for determining whether the cumulative consumption increment data is incorrect may be to subtract the received cumulative consumption increment data from the local correct consumption increment data cumulative value of the image forming device, compare the result of the subtraction with the cumulative value of the corresponding local consumption increment sub-data, and if the two are different or the difference between the two exceeds a predetermined range, that is, to indicate that the cumulative consumption increment data is incorrect based on the cumulative consumption increment data and the local consumption increment sub-data. Another way to determine whether the cumulative consumption increment data is incorrect is to subtract the corresponding local consumption increment sub-data from the correct cumulative consumption increment data of the image forming device, compare the result of the subtraction with the received cumulative consumption increment data, and if the two are different or the difference between them exceeds a predetermined range, then the cumulative consumption increment data is indicated to be incorrect based on the cumulative consumption increment data and the local consumption increment sub-data.

At step S604, consumption correction data is transmitted to the information processing device.

As described above with reference to FIGs. 4 and 5, the information processing device generates corrected cumulative consumption increment data based on the consumption correction data and the cumulative consumption increment data. For example, the corrected cumulative consumption increment data may be obtained by summing the consumption correction data and the cumulative consumption increment data.

At step S605, the corrected cumulative consumption increment data or the verification information of the corrected cumulative consumption increment data is obtained from the information processing device.

In certain embodiments of the present disclosure, after obtaining the corrected cumulative consumption increment data, the information processing device may feed back the corrected cumulative consumption increment data to the image forming device. Alternatively, the information processing device may obtain corresponding verification information based on the corrected cumulative consumption increment data, and then feed back the verification information to the image forming device. It should be understood that after the information processing device obtains the corrected cumulative consumption increment data or the verification information of the corrected cumulative consumption increment data, it may directly feed the above information back to the image forming device, or feed the above information back to the image forming device in response to the instruction of the image forming device.

In certain embodiments of the present disclosure, the image processing apparatus may regenerate consumable status information based on the corrected cumulative consumption increment data. For example, if the information processing device provides corrected cumulative consumption increment data, the image processing apparatus may determine whether the corrected cumulative consumption increment data is correct, thereby generating corresponding consumable status information. When the image processing apparatus determines that the corrected cumulative consumption increment data is correct, it may generate corresponding normal information; when the image processing apparatus determines that the corrected cumulative consumption increment data is incorrect, it may generate corresponding abnormal information. Alternatively, if the information processing device feeds back verification information corresponding to the corrected cumulative consumption increment data, the image processing apparatus may determine whether the verification information is correct, thereby generating the corresponding consumable status information. When the image processing apparatus determines that the verification information is correct, it may generate the corresponding normal information; when the image processing apparatus determines that the verification information is incorrect, it may generate the corresponding abnormal information.

In certain embodiments of the present disclosure, if the proportion of abnormal data reported by the information processing device exceeds a predetermined threshold, it may be determined that the information processing device or the consumables corresponding to the information processing device are not performing as expected. Alternatively, if the cumulative consumption increment data and local consumption increment sub-data indicate that the cumulative consumption increment data is incorrect, it may be determined that the information processing device or the consumables corresponding to the information processing device are not performing as expected. Alternatively, if the information processing device reports an error in the corrected cumulative consumption increment data or the verification information corresponding to the corrected cumulative consumption increment data, it may be determined that the information processing device or the consumables corresponding to the information processing device do not meet expectations.

The communication method applied to an image forming device according to certain embodiments of the present disclosure has been described above with reference to FIG. 6. According to the communication method applied to an image forming device according to certain embodiments of the present disclosure, by transmitting consumption increment data to an information processing device, and obtaining cumulative consumption increment data and/or consumption increment status data of consumable materials generated based on the consumption increment data, and generating consumable status information, it is possible to timely and reliably determine whether the information processing device or the corresponding consumable material meets expectations, facilitating the user's understanding of the consumable status information, and enabling timely and reliable synchronization of consumable material consumption information between the image forming device and the information processing device, which is beneficial to improving the stability of print operations.

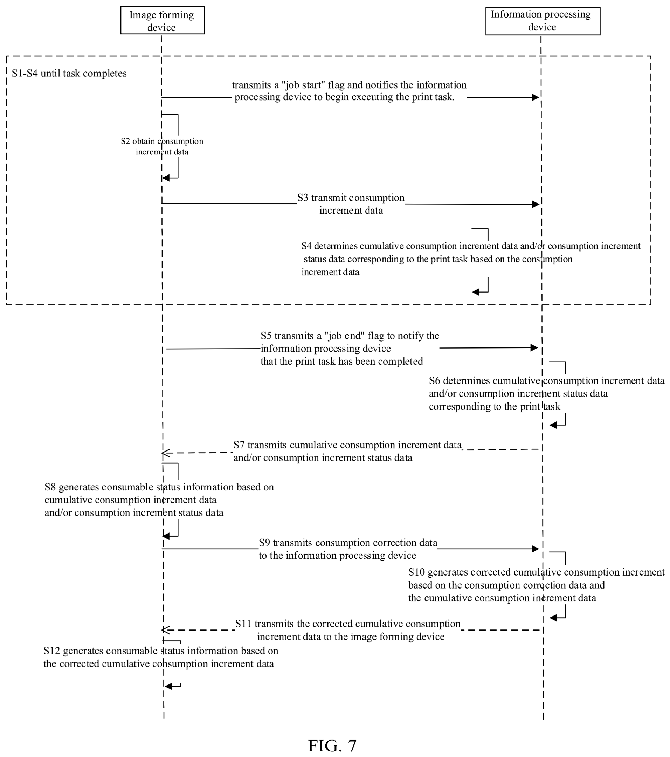

The communication flow of the image forming system according to certain embodiments of the present disclosure will be further described below with reference to FIG. 7. FIG. 7 is a schematic diagram illustrating the communication method of the image forming system according to certain embodiments of the present disclosure. The communication method shown in FIG. 7 is executed, for example, by the image forming device 100 and consumable chips 210 and 220 in the image forming system described with reference to FIGs. 1 to 2B.

At step S1, the image forming device (for example, image forming device 100) transmits a "job start" flag to the information processing device (for example, consumable chips 210, 220), notifying the information processing device to begin executing the print task.

It should be understood that the description of the print task as shown above with reference to FIGs. 4 to 6 also applies here, and its repetition will be omitted here.

At step S2, the image forming device acquires consumption increment data for the print task. In certain embodiments of the present disclosure, the consumption increment data is used to indicate the consumption information of consumable materials corresponding to the print task performed by the image forming device.

It should be understood that the description of the consumption increment data as shown above with reference to FIGs. 4 to 6 also applies here, and its repeated description will be omitted here.

At step S3, the image forming device transmits the consumption increment data acquired at step S2 to the information processing device.

It should be understood that the description of the method for transmitting consumption increment data as shown in FIGs. 4 to 6 above also applies here, and its repetition will be omitted here.

At step S4, the information processing device determines the cumulative consumption increment data and/or consumption increment status data of the consumable materials corresponding to the print task based on the consumption increment data.

It should be understood that the description above of the process for determining the cumulative consumption increment data and/or consumption increment status data of the consumable materials corresponding to the print task, as shown in FIG. 4, also applies here, and its repeated description will be omitted here.

The above steps S1 to S4 are repeated until the print task is completed.

At step S5, the image forming device transmits a "job end" flag to notify the information processing device that the print task has been completed.

It should be understood that the description of the print task as shown in FIGs. 4 to 6 above also applies here, and its repetition will be omitted here.

In certain embodiments of the present disclosure, the completion of the current print task may be determined based on the "job end" flag in the print task end instruction transmitted by the image forming device.

At step S6, the information processing device determines the cumulative consumption increment data and/or consumption increment status data of the consumable materials corresponding to the print task.

Specifically, in certain embodiments of the present disclosure, unlike step S4 which determines the cumulative consumption increment data and/or consumption increment status data of the consumable materials corresponding to the print task during the execution of the print task, step S6 determines the cumulative consumption increment data and/or consumption increment status data of the consumable materials corresponding to the print task for the last time after the print task is completed. It should be understood that after step S6, the cumulative consumption increment data and/or all consumption increment status data of the consumable materials corresponding to this print task may be determined.

It should be understood that the descriptions of the cumulative consumption increment data and/or consumption increment status data of the consumable material corresponding to the last determined print task, as shown in FIGs. 4 and 5 above, also apply here, and their repetition will be omitted here.

At step S7, the information processing device transmits the cumulative consumption increment data and/or consumption increment status data acquired at step S6 to the image forming device.

Specifically, in certain embodiments of the present disclosure, the data transmitted from the information processing device to the image forming device may include only consumption increment state data, or it may include both cumulative consumption increment data and consumption increment state data.

It should be understood that the description above regarding the transmission of cumulative consumption increment data and/or consumption increment state data with reference to FIGs. 4 and 5 also applies here, and its repetition will be omitted here.

At step S8, the image forming device generates consumable status information based on cumulative consumption increment data and/or consumption increment status data.

It should be understood that the description of generating consumable status information as shown in FIG. 6 above also applies here, and its repeated description will be omitted here.

At step S9, the image forming device transmits consumption correction data to the information processing device.

It should be understood that the description of consumption correction data as shown above with reference to FIG. 6 also applies here, and its repeated description will be omitted here.

At step S10, the information processing device generates corrected cumulative consumption increment data based on the consumption correction data and the cumulative consumption increment data.

At step S11, the information processing device transmits the corrected cumulative consumption increment data to the image forming device.

It should be understood that the description of the corrected cumulative consumption increment data as shown in FIGs. 4 and 5 above also applies here, and its repeated description will be omitted here.

At step S12, the image processing apparatus generates consumable status information again based on the corrected cumulative consumption increment data. The method for generating the consumable status information at step S12 is the same as at step S8, and its repeated description will be omitted here.

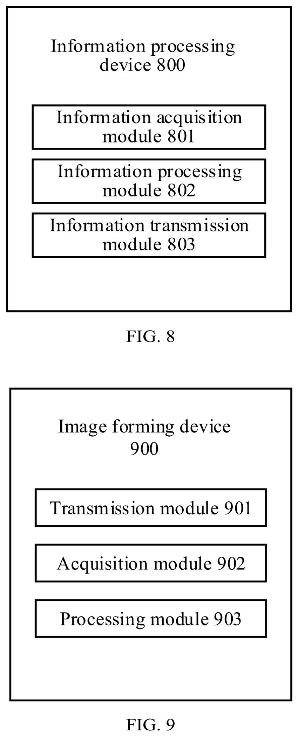

FIG. 8 is a block diagram illustrating an information processing device according to certain embodiments of the present disclosure.

As shown in FIG. 8, the information processing device 800 according to certain embodiments of the present disclosure includes an information acquisition module 801, an information processing module 802, and an information transmission module 803. The information processing device 800 corresponds to a consumable; for example, the information processing device 800 is arranged on the consumable, while the consumable is detachably mounted on the image forming device. Schematically, the information processing device 800 may be entirely arranged inside the consumable chip, or it may be a third-party device entirely arranged outside the consumable chip, or it may be partially arranged inside and partially arranged outside the consumable chip. Alternatively, the information processing device 800 may be the consumable chip itself.

In certain embodiments of the present disclosure, the information acquisition module 801 is used to acquire consumption increment data, which is used to indicate the consumption information of consumable materials corresponding to the image forming device performing a print task.

The information processing module 802 is used to determine, based on the consumption increment data, the cumulative consumption increment data and/or consumption increment status data of the consumable materials corresponding to the print task.

The information transmission module 803 is used to transmit cumulative consumption increment data and/or consumption increment status data to the image forming device.

As shown in FIGs. 4 to 7, the consumption increment data includes at least one piece of consumption increment sub-data and a corresponding sub-data identifier; or the consumption increment data includes at least one group of consumption increment sub-data and a corresponding sub-data group identifier. A group of consumption increment sub-data includes a predetermined number of pieces of consumption increment sub-data, and the sub-data group identifier includes a predetermined number of sub-data identifiers. The sub-data identifier includes an intra-group sequence number identifier, or a group sequence number identifier and an intra-group sequence number identifier.

The consumption increment sub-data includes: consumption increment sub-data of consumable materials in a print task that is equal to or less than the preset task quantity.

The consumption increment sub-data is used to indicate one or more of the following: consumption information corresponding to the predetermined number of pages printed, consumption information corresponding to the predetermined print time, consumption information corresponding to the predetermined amount of developer consumed, and consumption information corresponding to the predetermined photosensitive drum rotation distance.

Specifically, the information acquisition module 801 is further configured to: acquire consumption increment data from the image forming device; or, acquire at least one piece of consumption increment sub-data from the image forming device and determine a sub-data identifier corresponding to the at least one piece of consumption increment sub-data; or, acquire at least one group of consumption increment sub-data group from the image forming device and determine a sub-data group identifier corresponding to the at least one group of consumption increment sub-data group.

The information acquisition module 801 is also used to: count the acquired at least one piece of consumption increment sub-data, and determine the sub-data identifier corresponding to the at least one piece of consumption increment sub-data according to the counting result; or, time the acquired at least one piece of consumption increment sub-data, and determine the sub-data identifier corresponding to the at least one piece of consumption increment sub-data according to the timing result. Alternatively, count the consumption increment sub-data in at least one group of consumption increment sub-data group, and determine the sub-data group identifier corresponding to the at least one group of consumption increment sub-data group based on the counting results; or, time the consumption increment sub-data in at least one group of consumption increment sub-data group, and determine the sub-data group identifier corresponding to the at least one group of consumption increment sub-data group based on the timing results.

Specifically, the information processing module 802 is used to determine the consumption increment status data based on one or more of the consumption amount indicated by the consumption increment sub-data, the sub-data identifier, and the receiving time of the consumption increment data. The consumption increment status data is used to indicate whether the consumption increment sub-data is normal or abnormal, and/or whether the sub-data identifier corresponding to the consumption increment sub-data is a normal identifier or an abnormal identifier.

The consumption increment status data includes abnormality indication information indicating that the consumption increment sub-data is abnormal sub-data. The abnormality indication information corresponds to the sub-data identifier of the consumption increment sub-data that is not added to the cumulative consumption increment data.

The information processing module 802 is further configured to: determine the abnormality indication information based on the sub-data identifier corresponding to the consumption increment sub-data that is not added to the cumulative consumption increment data.

The information processing module 802 is further configured to: determine the cumulative consumption increment data based on the consumption increment sub-data as normal sub-data, or based on the consumption increment sub-data corresponding to the sub-data identifier as a normal identifier.

The information acquisition module 801 is further configured to: acquire consumption correction data; the information processing module 802 is further configured to: generate corrected cumulative consumption increment data based on the consumption correction data and the cumulative consumption increment data.

The information processing module 802 is also used to: determine that the consumption increment sub-data is abnormal sub-data and/or the sub-data identifier corresponding to the consumption increment sub-data is an abnormal identifier when the consumption amount indicated by the consumption increment sub-data is not within the predetermined consumption amount range.

The information processing module 802 is further configured to: when multiple sub-data identifiers are in a non-consecutive state, determine that the consumption increment sub-data corresponding to the missing sub-data identifier relative to the consecutive state is abnormal sub-data, and/or the missing sub-data identifier is an abnormal identifier; and/or when the sub-data identifier included in the last received consumption increment data is different from the last sub-data identifier included in the print task end instruction transmitted by the image forming device, determine that the missing sub-data identifier is an abnormal identifier, and/or the consumption increment sub-data corresponding to the missing sub-data identifier is abnormal sub-data, where the missing sub-data identifier includes the last sub-data identifier, or the last sub-data identifier and the missing sub-data identifier between the last sub-data identifier and the sub-data identifier included in the last received consumption increment data.

When the sub-data identifier includes a group sequence number identifier and an intra-group sequence number identifier, the information processing module 802 is further configured to: determine the consumption increment sub-data corresponding to the missing group sequence number identifier relative to the consecutive state as abnormal sub-data, and/or the sub-data identifier corresponding to the missing group sequence number identifier as abnormal identifier when the group sequence number identifiers corresponding to multiple sub-data group identifiers are in a non-consecutive state. And/or if the group sequence number identifier of the last received sub-data identifier is different from the last group sequence number identifier included in the print task end instruction transmitted by the image forming device, the sub-data identifier corresponding to the missing group sequence number identifier is determined to be an abnormal identifier, and/or the consumption increment sub-data corresponding to the missing group sequence number identifier is determined to be abnormal sub-data, where the missing group sequence number identifier includes the last group sequence number identifier, or the last group sequence number identifier and the missing group sequence number identifier between the last group sequence number identifier and the group sequence number identifier of the last received sub-data identifier.

The information processing module 802 is also configured to: identify sub-data identifiers in the sub-data group identifiers that do not meet the preset intra-group sequence number identifier rules as abnormal identifiers; or, identify the sub-data identifiers corresponding to preset identifiers in the preset identifier set that are different from the intra-group sequence number identifiers corresponding to the sub-data group identifiers as abnormal identifiers, where the preset identifier set includes a preset number of preset identifiers.

The information processing module 802 is also configured to: determine that the corresponding consumption increment sub-data is abnormal sub-data and/or the corresponding sub-data identifier is an abnormal identifier if no consumption increment data is received within a predetermined receiving time range.

The information processing module 802 is further configured to determine the number of pieces of abnormal data based on the consumption increment status data, where the number of pieces of abnormal data is determined based on abnormal identifiers and/or abnormal sub-data.

The information transmission module 803 is further configured to transmit the number of pieces of abnormal data to the image forming device.

It should be understood that the information acquisition module 801, information processing module 802, and information transmission module 803 in the information processing device 800 may be implemented using software or hardware.

In one possible implementation, at least one of the information acquisition module 801, information processing module 802, and information transmission module 803 may be an external module electrically connected to the consumable chip, while the other units are built into the chip control unit of the consumable chip. That is, the aforementioned consumable includes the consumable chip and the external module electrically connected to it. Specifically, the chip control unit may be a circuit unit of a device such as a microcontroller unit (MCU), a field-programmable gate array (FPGA), or a digital signal processor (DSP).

Specifically, the information acquisition module 801, the information processing module 802, and the information transmission module 803 may be circuit units including devices such as FPGA, MCU, and DSP. The information transmission module 803 may also implement its function by building a specific waveform generator circuit. The information acquisition module 801 and the information processing module 802 may also implement their corresponding functions by building a digital logic calculator. The present disclosure does not impose restrictions on the implementation form of each unit.

In one possible implementation, the information acquisition module 801, information processing module 802, and information transmission module 803 are all included in the consumable chip.

In another possible implementation, the information acquisition module 801, information processing module 802, and information transmission module 803 are included in the chip control unit of the consumable chip.

In one possible implementation, the information acquisition module 801, the information processing module 802, and the information transmission module 803 are modules different from the consumable chip and are arranged on the consumable. The present disclosure does not impose restriction on this.

In one possible implementation, the information acquisition module 801, the information processing module 802, and the information transmission module 803 are respectively arranged on two or more different consumable chips that may communicate with each other. Preferably, the information acquisition module 801 and the information transmission module 803 are arranged on the first consumable chip, and the information processing module 802 is arranged on the second consumable chip. After the information acquisition module 801 of the first consumable chip acquires the consumption increment data of the image forming device, it forwards the consumption increment data to the second consumable chip. The information processing module 802 of the second consumable chip determines the cumulative consumption increment data and/or consumption increment status data of the consumable material corresponding to the print task based on the consumption increment data, and transmits the cumulative consumption increment data and/or consumption increment status data to the first consumable chip. The information transmission module 803 of the first consumable chip outputs the cumulative consumption increment data and/or consumption increment status data to the image forming device. Of course, those skilled in the technical field may also arrange the information acquisition module 801, the information processing module 802, and the information transmission module 803 on different consumable chips in other ways, and the present disclosure does not impose restrictions on this.

It should be noted that the details on processing performed by the information acquisition module 801, the information processing module 802, and the information transmission module 803 may be found in reference to FIGs. 4, 5, and 7, and their repeated descriptions are omitted here.

The present disclosure provides an image forming device capable of executing the communication method described above. The image forming device may include a controller configured to execute some or all of the methods described in the communication method embodiments. It should be noted that the details involved may be found in the descriptions of the above embodiments, and for the sake of brevity, they will not be repeated here.

The present disclosure also provides an image forming device according to certain embodiments. As shown in FIG. 9, the image forming device 900 according to certain embodiments of the present disclosure includes a transmission module 901, an acquisition module 902, and a processing module 903.

The transmission module 901 is configured to transmit consumption increment data to an information processing device, the consumption increment data being used to indicate the consumption information of consumable materials corresponding to the image forming device performing a print task.

The acquisition module 902 is configured to acquire cumulative consumption increment data and/or consumption increment status data of consumable materials from the information processing device.

The processing module 903 is configured to generate consumable status information based on the cumulative consumption increment data and/or consumption increment status data, where the cumulative consumption increment data and/or consumption increment status data of consumable materials are determined by the information processing device based on the consumption increment data.

The transmission module 901, acquisition module 902, and processing module 903 in the image forming device 900 may be implemented using software or hardware.

In certain embodiments of the present disclosure, the transmission module 901, acquisition module 902, and processing module 903 may be housed in the control chip of the image forming device.

In one possible implementation, at least one of the transmission module 901, the acquisition module 902, and the processing module 903 may be an external module electrically connected to the control chip, while the other units are built into the control chip. That is, the image forming device 900 includes a control chip and external modules electrically connected to the control chip. Specifically, the control chip may be a circuit unit of a device such as a microcontroller unit (MCU), a field-programmable gate array (FPGA), or a digital signal processor (DSP).

Specifically, the transmission module 901, the acquisition module 902, and the processing module 903 may be circuit units including devices such as FPGA, MCU, and DSP. The transmission module 901 may also implement its function by building a waveform generator circuit. The acquisition module 902 and the processing module 903 may also implement their corresponding functions by building a digital logic calculator. The present disclosure does not impose restriction on the implementation form of each unit.

In one possible implementation, the transmission module 901, the acquisition module 902, and the processing module 903 are all included in the control chip of the image forming device.

In another possible implementation, the transmission module 901, the acquisition module 902, and the processing module 903 are included in the chip control unit of the control chip of the image forming device.

In one possible implementation, the transmission module 901, the acquisition module 902, and the processing module 903 are modules different from the control chip arranged on the image forming device, and the present disclosure does not impose restrictions on them.

In one possible implementation, the transmission module 901, the acquisition module 902, and the processing module 903 are respectively arranged on two or more different control chips that may communicate with each other. Preferably, the transmission module 901 and the acquisition module 902 are arranged on a first control chip, and the processing module 903 is arranged on a second control chip, where the transmission module 901 of the first control chip transmits the consumption increment data to the information processing device. After the acquisition module 902 of the first control chip acquires the cumulative consumption increment data and/or consumption increment status data of the consumable materials from the information processing device, it forwards the cumulative consumption increment data and/or consumption increment status data to the second consumable chip. The processing module 903 of the second consumable chip generates consumable status information based on the cumulative consumption increment data and/or consumption increment status data. Of course, those skilled in the technical field may also arrange the transmission module 901, the acquisition module 902, and the processing module 903 on different control chips in other ways, and the present disclosure does not impose restrictions on this.

Further details on processing performed by the transmission module 901, the acquisition module 902, and the processing module 903 may be found in reference to FIGs. 6 and 7, and its repeated description is omitted here.

Certain embodiments of the present disclosure also provides a consumable.

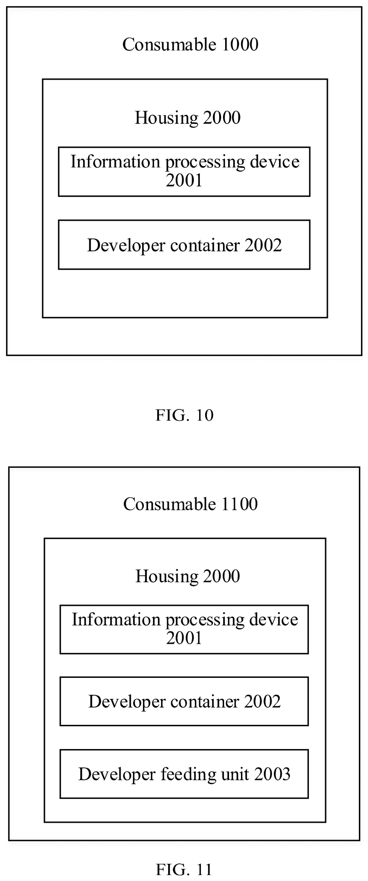

FIG. 10 is a schematic diagram illustrating the structure of a consumable according to certain embodiments of the present disclosure. As shown in FIG. 10, the consumable 1000 includes a housing 2000; a developer container 2002 located inside the housing for containing developer; and the information processing device 2001 described in the above embodiments.

FIG. 11 is a schematic diagram illustrating the structure of another consumable according to certain embodiments of the present disclosure. As shown in FIG. 11, the consumable 1100, based on the embodiment shown in FIG. 10, further includes a developer feeding unit 2003 for delivering developer.

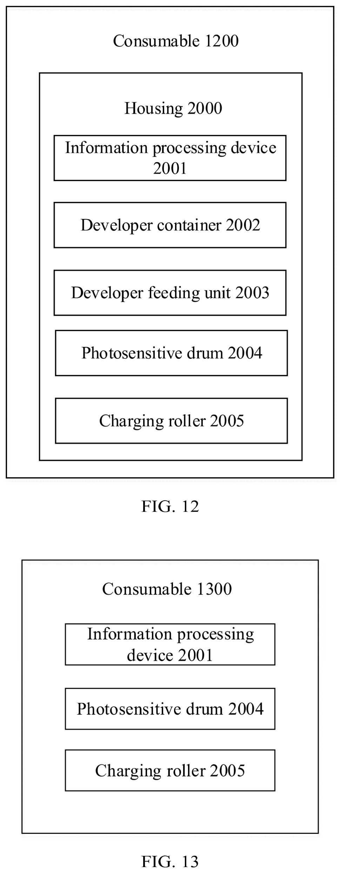

FIG. 12 is a schematic diagram illustrating the structure of another consumable according to certain embodiments of the present disclosure. As shown in FIG. 12, the consumable 1200, based on the embodiment shown in FIG. 11, further includes a photosensitive drum 2004 and a charging roller 2005 for charging the photosensitive drum 2004.

FIG. 13 is a schematic diagram illustrating the structure of another consumable according to certain embodiments of the present disclosure. As shown in FIG. 13, the consumable 1300 includes a photosensitive drum 2004; a charging roller 2005 for charging the photosensitive drum 2004; and the information processing device 2001 described in the above embodiments.

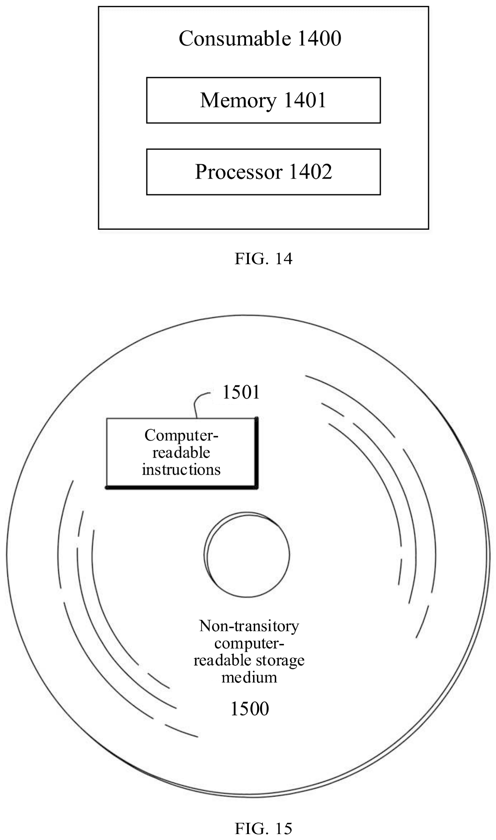

FIG. 14 is a schematic diagram illustrating the structure of another consumable according to certain embodiments of the present disclosure. As shown in FIG. 14, the consumable 1400 includes a memory 1401; and a processor 1402 coupled to the memory 1401, the processor 1402 being configured to execute the communication method described above in the embodiment based on instructions stored in the memory 1401.

It should be noted that the details of the information processing device and communication method in certain embodiments shown in FIGs. 10 to 14 may be found in the description of the above embodiments, and will not be repeated here for the sake of brevity.

FIG. 15 is a schematic diagram illustrating a non-transitory computer-readable storage medium according to certain embodiments of the present disclosure. As shown in FIG. 15, the non-transitory computer-readable storage medium 1500 is used to store computer-readable instructions 1501, which, when executed by a processor, cause the processor to perform the communication method described above.

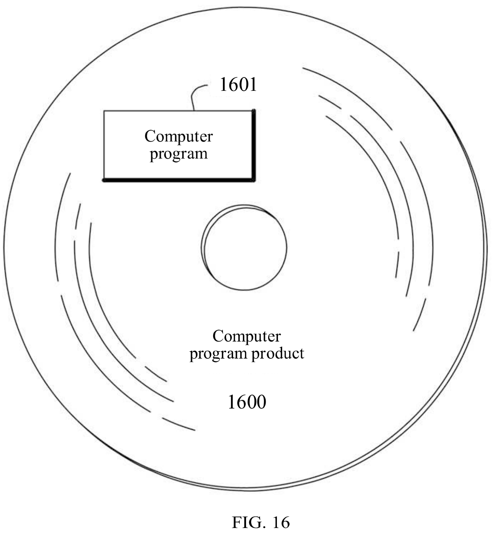

FIG. 16 is a schematic diagram illustrating a computer program product according to certain embodiments of the present disclosure. As shown in FIG. 16, the computer program product 1600 includes a computer program 1601, which, when executed by a processor, implements the communication method described above.

The communication method, information processing device, image forming device, consumables, non-transitory computer-readable storage medium, and computer program product according to certain embodiments of the present disclosure have been described above with reference to the accompanying drawings. By having the information processing device determine and feed back the cumulative consumption increment data and/or consumption increment status data of the consumables corresponding to the print task to the image forming device based on the consumption increment data, the consumption information of the consumables between the image forming device and the information processing device is synchronized in a timely and reliable manner. This enables the image forming device to determine whether the information processing device or the corresponding consumables meet expectations, facilitates the user's understanding of the status information of the consumables, and helps improve the stability of the print operation.

The basic principles of the present disclosure have been described above with reference to certain embodiments. However, it should be noted that the advantages, benefits, and effects mentioned in the present disclosure are merely examples and not limitations, and should not be considered as essential features of each embodiment of the present disclosure. Furthermore, the specific details disclosed above are for illustrative and facilitative purposes only, and do not impart restrictions. These details do not restrict the scope of the present disclosure in employing the aforementioned details for implementation.

The block diagrams of devices, apparatuses, devices, and systems disclosed herein are merely illustrative examples and are not intended to require or imply that they must be connected, arranged, or configured in the manner shown in the block diagrams. As those skilled in the technical field recognize, these devices, apparatuses, devices, and systems may be connected, arranged, and configured in any suitable manner. Words such as "comprising," "including," "having," or the like., are open-ended terms meaning "including but not limited to," and are used interchangeably with them. The terms "or" and "and" as used herein refer to the terms "and/or," and are used interchangeably with them unless the context clearly indicates otherwise. The term "such as" as used herein refers to the phrase "such as but not limited to," and is used interchangeably with it.

Additionally, as used herein, the "or" used in a list of items beginning with "at least one" indicates a separate list, such that a list of, for example, "at least one of A, B, or C" means A or B or C, or AB or AC or BC, or ABC (for example, A and B and C). Furthermore, the word "exemplary" does not imply that the described example is preferred or better than other examples.

It should also be noted that in the systems and methods of the present disclosure, the components or steps may be decomposed and/or recombined. These decompositions and/or recombinations should be considered as equivalent solutions to the present disclosure.

Various changes, substitutions, and modifications may be made to the technology described herein without departing from the teachings defined by the appended claims. Furthermore, the scope of the claims of the present disclosure is not limited to the aspects of the processes, machines, manufactures, events, means, methods, and actions described above. Currently existing or later-developed processes, machines, manufactures, events, means, methods, or actions that perform substantially the same function or achieve substantially the same result as the corresponding aspects described herein may be utilized. Therefore, the appended claims include such processes, machines, manufactures, events, means, methods, or actions within their scope.

The above description of the disclosed aspects is provided to enable any person skilled in the technical field to make or use the present disclosure. Various modifications to these aspects may be readily apparent to those skilled in the technical field, and the general principles defined herein may be applied to other aspects without departing from the scope of the present disclosure. Therefore, the present disclosure is not intended to be limited to the aspects shown herein, but rather to be carried out within the widest scope consistent with the principles and novel features disclosed herein.

The above description has been given for purposes of illustration and description. Furthermore, this description is not intended to limit certain embodiments of the present disclosure to the forms disclosed herein. Although numerous exemplary aspects and embodiments have been discussed above, those skilled in the technical field recognize certain variations, modifications, alterations, additions, and sub-combinations thereof.

## Claims

1. A communication method applied to an information processing device, the method comprising:
acquiring consumption increment data, configured to indicate consumption information of consumable materials corresponding to a print task performed by an image forming device;
based on the consumption increment data, determining cumulative consumption increment data and/or consumption increment status data of the consumable materials corresponding to the print task; and
transmitting the cumulative consumption increment data and/or the consumption increment status data to the image forming device.

2. The communication method of claim 1, further comprising:
receiving a print task end instruction; and
based on the print task end instruction, obtaining consumption increment status data of consumable materials corresponding to the print task, wherein the consumption increment status data is determined according to the consumption increment data and is configured to indicate whether the consumption increment data is normal data or abnormal data, and/or an identifier corresponding to the consumption increment data is a normal identifier or an abnormal identifier.

3. The communication method of claim 1, wherein the consumption increment data comprises at least one piece of consumption increment sub-data and a corresponding sub-data identifier; or the consumption increment data comprises at least one group of consumption increment sub-data group and a corresponding sub-data group identifier, wherein the at least one group of consumption increment sub-data comprises a predetermined number of pieces of consumption increment sub-data, the sub-data group identifier comprises a predetermined number of sub-data identifiers, and the sub-data identifier comprises an intra-group sequence number identifier, or a group sequence number identifier and an intra-group sequence number identifier.

4. The communication method of claim 3, wherein acquiring the consumption increment data comprises:
acquiring consumption increment data from the image forming device; or
acquiring at least one piece of consumption increment sub-data from the image forming device, and determining a sub-data identifier corresponding to each of the at least one piece of consumption increment sub-data; or
acquiring at least one group of consumption increment sub-data from the image forming device, and determining a sub-data group identifier corresponding to each of the at least one group of consumption increment sub-data,
wherein the consumption increment sub-data comprises: consumption increment sub-data of consumable materials in the print task that is equal to or less than a preset task quantity.

5. The communication method of claim 4,
wherein determining the sub-data identifier corresponding to at least one piece of consumption increment sub-data item comprises:
counting the acquired at least one piece of consumption increment sub-data, and determining the sub-data identifier corresponding to the at least one piece of consumption increment sub-data based on a counting result; or
timing the acquired at least one piece of consumption increment sub-data, and determining the sub-data identifier corresponding to the at least one piece of consumption increment sub-data item based on a timing result; or
wherein determining the sub-data group identifier corresponding to at least one group of consumption increment sub-data comprises:
counting consumption increment sub-data pieces in the acquired at least one group of consumption increment sub-data, and determining the sub-data group identifier corresponding to the at least one group of consumption increment sub-data based on a counting result; or,
timing the consumption increment sub-data pieces in the acquired at least one group of consumption increment sub-data, and determining the sub-data group identifier corresponding to the at least one group of consumption increment sub-data items based on a timing result.

6. The communication method of claim 3, wherein determining the consumption increment status data comprises:
determining the consumption increment status data based on one or more of consumption amount indicated by the consumption increment sub-data, the sub-data identifier, and receiving time of the consumption increment data, wherein the consumption increment status data is configured to indicate whether the consumption increment sub-data is normal sub-data or abnormal sub-data, and/or whether the sub-data identifier corresponding to the consumption increment sub-data is a normal identifier or an abnormal identifier.

7. The communication method of claim 3, wherein the consumption increment status data comprises an abnormality indication information for indicating that the consumption increment sub-data is abnormal sub-data, and the abnormality indication information corresponds to the sub-data identifier of the consumption increment sub-data that has not been added to the cumulative consumption increment data, wherein determining the consumption increment status data further comprises:
determining the abnormality indication information based on the sub-data identifier corresponding to the consumption increment sub-data that has not been added to the cumulative consumption increment data;
wherein when determining cumulative consumption increment data based on the consumption increment data, determining the cumulative consumption increment data comprises:
determining the cumulative consumption increment data based on the consumption increment sub-data as normal sub-data, or based on the consumption increment sub-data corresponding to the sub-data identifier as a normal identifier.

8. The communication method of claim 1, further comprising:
acquiring consumption correction data; and
generating corrected cumulative consumption increment data based on the consumption correction data and the cumulative consumption increment data.

9. The communication method of claim 6, wherein determining the consumption increment status data based on one or more of the consumption amount indicated by the consumption increment sub-data, the sub-data identifier, and the receiving time of the consumption increment data comprises:
determining the consumption increment sub-data as the abnormal sub-data when the consumption amount indicated by the consumption increment sub-data is not within a predetermined consumption range, and/or determining the sub-data identifier corresponding to the consumption increment sub-data as the abnormal identifier; or,
wherein determining the consumption increment status data based on one or more of the consumption amount indicated by the consumption increment sub-data, the sub-data identifier, and the receiving time of the consumption increment data comprises:
when multiple sub-data identifiers are in a non-consecutive state, determining the consumption increment sub-data corresponding to a missing sub-data identifier relative to the consecutive state as the abnormal sub-data, and/or the missing sub-data identifier as the abnormal identifier; and/or
when the sub-data identifier included in the last received consumption increment data is different from the last sub-data identifier included in the print task end instruction transmitted by the image forming device, determining the missing sub-data identifier as the abnormal identifier, and/or the consumption increment sub-data corresponding to the missing sub-data identifier as the abnormal sub-data,
wherein the missing sub-data identifier comprises the last sub-data identifier, or the last sub-data identifier and the missing sub-data identifier between the last sub-data identifier and the sub-data identifier included in the last received consumption increment data; or,
wherein determining the consumption increment status data based on one or more of the consumption amount indicated by the consumption increment sub-data, the sub-data identifier, and the receiving time of the consumption increment data comprises:
determining the corresponding consumption increment sub-data as abnormal sub-data and/or the corresponding sub-data identifier as the abnormal identifier if the consumption increment data is not received within a predetermined receiving time range.

10. The communication method of claim 6, wherein when the sub-data identifier comprises a group sequence number identifier and an intra-group sequence number identifier, determining the consumption increment status data based on one or more of the consumption amount indicated by the consumption increment sub-data, the sub-data identifier, and the receiving time of the consumption increment data comprises :
when the group sequence number identifiers corresponding to multiple sub-data group identifiers are in a non-consecutive state, determining that the consumption increment sub-data corresponding to the missing group sequence number identifier relative to the consecutive state is the abnormal sub-data, and/or the sub-data identifier corresponding to the missing group sequence number identifier is an abnormal identifier; and/or
when the group sequence number identifier of the last received sub-data identifier is different from the last group sequence number identifier included in the print task end instruction transmitted by the image forming device, determining that the sub-data identifier corresponding to the missing group sequence number identifier is an abnormal identifier, and/or the consumption increment sub-data corresponding to the missing group sequence number identifier is the abnormal sub-data,
wherein the missing group sequence number identifier comprises the last group sequence number identifier, or the last group sequence number identifier and the missing group sequence number identifier between the last group sequence number identifier and the group sequence number identifier of the last received sub-data identifier.

11. The communication method of claim 6, wherein determining the consumption increment status data based on one or more of the consumption amount indicated by the consumption increment sub-data, the sub-data identifier, and the receiving time of the consumption increment data comprises:
determining sub-data identifier in the sub-data group identifier that do not satisfy a preset intra-group sequence number identifier rule as the abnormal identifier; or
determining the sub-data identifiers corresponding to preset identifiers in a preset identifier set that are different from the intra-group sequence number identifiers corresponding to the sub-data group identifier as the abnormal identifiers, wherein the preset identifier set comprises a preset number of preset identifiers.

12. The communication method of claim 3, further comprising:
determining the number of pieces of abnormal data based on the consumption increment state data, wherein the number of pieces of abnormal data is determined based on abnormal identifier and/or abnormal sub-data; and
transmitting the number of pieces of abnormal data to the image forming device.

13. An information processing device, comprising: a memory and one or more processors, the memory storing a computer program executable by the one or more processors, wherein when the computer program is executed, the one or more processors are configured to implement the communication method of claim 1.

14. A consumable, comprising: a housing; a developer container located within the housing for containing developer; and the information processing device of claim 13.

15. A consumable, comprising: a photosensitive drum; a charging roller for charging the photosensitive drum; and the information processing device of claim 13.
